(19) **Europäisches Patentamt / European Patent Office / Office européen des brevets**

(11) **EP 4 783 411 A1**

(12) **EUROPEAN PATENT APPLICATION**
published in accordance with Art. 153(4) EPC

(43) Date of publication:
29.07.2026 Bulletin 2026/31

(21) Application number: 25765462.4

(22) Date of filing: 16.09.2025

(51) International Patent Classification (IPC):
$H02J\ 7/04^{(2006.01)}$    $H02M\ 3/07^{(2006.01)}$
$G01R\ 27/08^{(2006.01)}$    $G01R\ 31/389^{(2019.01)}$

(52) Cooperative Patent Classification (CPC):
H02J 7/04; H02M 3/072

(86) International application number:
PCT/KR2025/014407

(87) International publication number:
WO 2026/063689 (26.03.2026 Gazette 2026/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 19.09.2024 KR 20240126457
28.11.2024 KR 20240173861

(71) Applicant: Samsung Electronics Co., Ltd.
Suwon-si, Gyeonggi-do 16677 (KR)

(72) Inventors:
• GU, Beomwoo
  Suwon-si, Gyeonggi-do 16677 (KR)
• CHOI, Hangseok
  Suwon-si, Gyeonggi-do 16677 (KR)
• BYUN, Kangho
  Suwon-si, Gyeonggi-do 16677 (KR)

(74) Representative: HGF
HGF Limited
4th Floor, 1 City Square
Leeds LS1 2ES (GB)

(54) **ELECTRONIC DEVICE FOR CHARGING BATTERY BY USING SWITCHED CAPACITOR VOLTAGE DIVIDER, AND OPERATING METHOD THEREFOR**

(57) According to an embodiment, an electronic device may include a communication circuit, a battery, a switched capacitor voltage divider (SCVD) configured to convert an input voltage into an output voltage supplied to the battery according to a specified ratio, and a processor. According to an embodiment, the processor is configured to, based on receiving power wiredly or wirelessly from an external power supply, charge the battery using the SCVD. According to an embodiment, the processor may be configured to, while charging the battery using the SCVD, identify a first voltage (VIN) and a first current (IIN) input to the SCVD and a second voltage (VBAT) and a second current (IBAT) input to the battery. According to an embodiment, the processor may be configured to, based on identifying the first voltage, the first current, the second voltage, and the second current, calculate a first resistance (RT) which is an equivalent resistance from the external power supply to an input terminal of the SCVD, and a second resistance (RCH) which is an equivalent resistance from an output terminal of the SCVD to an input terminal of the battery, and a third resistance (RDCR) which is an internal resistance of the battery. According to an embodiment, the processor may be configured to, in response to identifying a voltage change condition for requesting a change in a voltage of the power from the external power supply, request, from the external power supply via the communication circuit, the change in the voltage of the power by a first change value to change the voltage, wherein the first change value is identified using at least one of the first resistance, the second resistance, or the third resistance.

**(Cont. next page)**

EP 4 783 411 A1

START

CHARGE BATTERY USING SCVD BASED ON RECEIVING POWER FROM EXTERNAL POWER SUPPLY SUPPORTING AVS THROUGH CONNECTOR —501

IDENTIFY FIRST VOLTAGE (VIN) AND FIRST CURRENT (IIN) INPUT TO SCVD AND SECOND VOLTAGE (VBAT) AND SECOND CURRENT (IBAT) INPUT TO BATTERY WHILE CHARGING BATTERY —503

IDENTIFY FIRST RESISTANCE, WHICH IS EQUIVALENT RESISTANCE FROM POWER SUPPLY OF EXTERNAL POWER SUPPLY TO INPUT TERMINAL OF SCVD, SECOND RESISTANCE, WHICH IS EQUIVALENT RESISTANCE FROM OUTPUT TERMINAL OF SCVD TO INPUT TERMINAL OF BATTERY, AND THIRD RESISTANCE, WHICH IS INTERNAL RESISTANCE OF BATTERY, BY USING AT LEAST ONE OF FIRST VOLTAGE, FIRST CURRENT, SECOND VOLTAGE, OR SECOND CURRENT —505

IDENTIFY FIRST CHANGE VALUE FOR CHANGING VOLTAGE BY USING FIRST RESISTANCE, SECOND RESISTANCE, AND THIRD RESISTANCE BASED ON IDENTIFYING VOLTAGE CHANGE CONDITION FOR CHANGING VOLTAGE OF POWER RECEIVED FROM EXTERNAL POWER SUPPLY —507

REQUEST, FROM EXTERNAL POWER SUPPLY, CHANGE IN VOLTAGE OF POWER BY FIRST CHANGE VALUE THROUGH CONNECTOR —509

END

FIG. 5

**Description**

[Technical Field]

The disclosure relates to an electronic device for charging a battery using a switched capacitor voltage divider and a method of operating the same.

[Background Art]

Recently, the use of portable electronic devices such as smart phones, tablet PCs, wearable devices, or augmented reality (AR) glasses has increased, and as the use of electronic devices has rapidly increased, research on batteries to extend their usage time has been actively conducted. These electronic devices may be configured to use a highspeed charging method that can receive a larger amount of power to reliably receive more power.

[Detailed Description of the Invention]

[Technical Solution]

In accordance with an aspect of the disclosure, an electronic device includes a communication circuit, a battery, a switched capacitor voltage divider (SCVD) configured to convert an input voltage into an output voltage supplied to the battery according to a specified ratio, and a processor. According to an embodiment, the processor may be configured to, based on receiving power wiredly or wirelessly from an external power supply, charge the battery using the SCVD. According to an embodiment, the processor may be configured to, while charging the battery using the SCVD, identify a first voltage VIN and a first current IIN input to the SCVD and a second voltage VBAT and a second current IBAT input to the battery. According to an embodiment, the processor may be configured to, based on identifying the first voltage, the first current, the second voltage, and the second current, calculate a first resistance RT corresponding to an input terminal of the SCVD, and a second resistance RCH and a third resistance RDCR corresponding to an output terminal of the SCVD. According to an embodiment, the processor may be configured to, in response to identifying a voltage change condition for requesting a change in a voltage of the power from the external power supply, request, from the external power supply via the communication circuit, the change in the voltage of the power by a first change value to change the voltage, wherein the first change value is identified using at least one of the first resistance, the second resistance, or the third resistance.

In accordance with another aspect of the disclosure, a method of operating an electronic device including a SCVD includes charging a battery included in the electronic device using the SCVD based on receiving power wiredly or wirelessly from an external power supply. According to an embodiment, the method of operating the electronic device may include identifying, while charging the battery using the SCVD, a first voltage VIN and a first current IIN input to the SCVD and a second voltage VBAT and a second current IBAT input to the battery. According to an embodiment, the method of operating the electronic device may include calculating, based on identifying the first voltage, the first current, the second voltage, and the second current, a first resistance RT which is an equivalent resistance from the external power supply to an input terminal of the SCVD, and a second resistance RCH which is an equivalent resistance from an output terminal of the SCVD to an input terminal of the battery, and a third resistance RDCR which is an internal resistance of the battery. According to an embodiment, the method of operating the electronic device may include in response to identifying of a voltage change condition for requesting a change in a voltage of the power from the external power supply, requesting, from the external power supply via a communication circuit of the electronic device, a change in the voltage of the power as much as a first change value for changing the voltage, wherein the first change value is identified using at least one of the first resistance, the second resistance, or the third resistance.

[Brief Description of Drawings]

FIG. 1 is a block diagram illustrating an electronic device in a network environment according to an embodiment.
FIG. 2 is a block diagram illustrating a schematic configuration of an electronic device according to an embodiment.
FIG. 3A and FIG. 3B are circuit diagrams illustrating an external power supply and an electronic device according to an embodiment.
FIG. 4A and FIG. 4B are equivalent circuit diagrams illustrating an electronic device for changing the voltage of power output from an external power supply according to an embodiment.
FIG. 5 is a flowchart illustrating a method for an electronic device to request, from an external power supply, a change in the voltage of power according to an embodiment.

FIG. 6 is a flowchart more specifically illustrating a method for an electronic device to request, from an external power supply, a change in the voltage of power according to an embodiment.

FIG. 7 is a flowchart illustrating a method for an electronic device to determine a change value for requesting, from an external power supply, a change in the voltage of power according to an embodiment.

FIG. 8 illustrates graphs for explaining a method for an electronic device to determine a change value for requesting a voltage change from an external power supply when the electronic device starts to charge a battery using an SCVD according to an embodiment.

FIG. 9 illustrates graphs for explaining a method for an electronic device to determine a change value for requesting a voltage change from an external power supply while the electronic device is in a constant voltage (CV) charging state of a battery according to an embodiment.

FIG. 10 illustrates graphs for explaining a method for an electronic device to determine a change value for requesting a voltage change from an external power supply when the electronic device is in a constant current (CC) charging state of a battery according to an embodiment.

FIG. 11 is an equivalent circuit diagram illustrating an electronic device when a load change occurs in a system according to an embodiment.

FIG. 12A and FIG. 12B are flowcharts illustrating a method for an electronic device to determine a resistance value for each state according to an embodiment.

FIG. 13 illustrates graphs for explaining a method for an electronic device to compensate for resistance values when a load change is detected according to an embodiment.

FIG. 14 illustrates graphs for explaining a method for an electronic device to compensate for resistance values according to an embodiment.

FIG. 15 is a flowchart illustrating a method for an electronic device to determine a resistance value when a load change is detected according to an embodiment.

FIG. 16 illustrates graphs for explaining a method for an electronic device to determine a time point when a resistance value is calculated according to an embodiment.

[Mode for Carrying out the Invention]

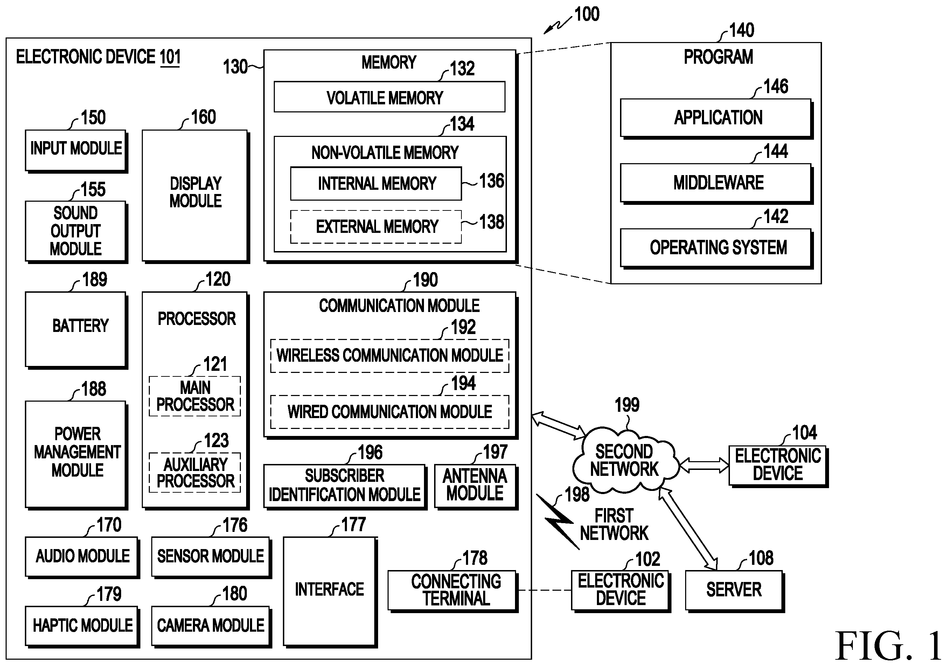

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application).

According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

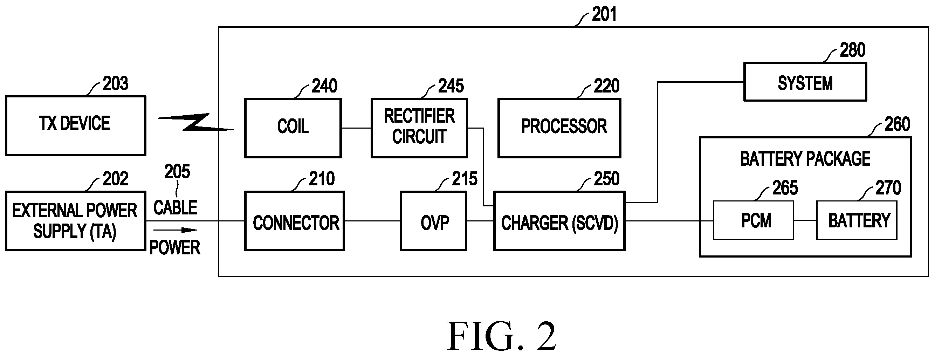

FIG. 2 is a block diagram illustrating a schematic configuration of an electronic device according to an embodiment.

Referring to FIG. 2, an electronic device 201 (e.g., the electronic device 101 of FIG. 1) according to an embodiment may include a processor 220, a charger (or charging circuit) 250, a battery 270, and a system 280.

Referring to FIG. 2, the electronic device 201 (e.g., the electronic device 101 of FIG. 1) according to an embodiment may include a connector 210, an over voltage protection (OVP) 215, the processor 220, a coil 240, a rectifier circuit 245, the charger (or charging circuit) 250, a battery package 260 (which may include the battery 270), and the system 280. The electronic device 201 according to an embodiment is not limited thereto and may be configured by further including various components or excluding some of the above components. The electronic device 201 according to an embodiment may further include all or some of the components of the electronic device 101 illustrated in FIG. 1.

According to an embodiment, the processor 220 may control the overall operation of the electronic device 201. For example, the processor 220 may be implemented identically or similarly to the processor 120 of FIG. 1. The processor 220 according to an embodiment may execute software (e.g., the program 140 of FIG. 1) to control at least one other component (e.g., a hardware or software component) of the electronic device 201 connected to the processor 220, and perform data processing or calculation based on instructions. The instruction according to an embodiment may include a command composed of a machine language that can be processed by the electronic device 201 or the processor 220. For example, the instruction may include a command corresponding to an operation instruction used in a program.

Meanwhile, in FIG. 2, the electronic device 201 is illustrated as including one processor 220, but this is exemplary and the technical idea of the disclosure may not be limited thereto. For example, the electronic device 201 may include at least one processor. For example, the processor 220 may be implemented as at least one processor.

According to an embodiment, the electronic device 201 may further include memory (e.g., the memory 130 of FIG. 1). The memory may store at least one instruction that causes at least one operation of the electronic device 201. When executed by the processor 220, the at least one instruction may cause the electronic device 201 to perform a corresponding operation.

According to an embodiment, the electronic device 201 may receive power from an external power supply 202 (or a power transmitter, an external power source) (e.g., a travel adapter (TA)) wirelessly, or in a wired manner through a connector 210 (or a wired interface). For example, the electronic device 201 may receive required power based on power having various voltage levels supported by the external power supply 202. For example, the external power supply 202 may be implemented as a power transmitter supporting an adjustable voltage supply (AVS). For example, the external power supply 202 supporting the AVS may transmit power in the range of 9 to 20 V to the electronic device 201 based on the USB-power delivery (PD) 3.2 standard.

According to an embodiment, the connector 210 (e.g., a wired interface) may include a connection unit (e.g., a USB port) that can be connected to the external power supply 202. For example, the connector 210 may further include a power delivery (PD) IC (not shown) for receiving power in a wired manner. Depending on the implementation, the PD IC may be implemented as a separate configuration from a wired interface. The PD IC may request power required by the electronic device 201 from the power transmitter under the control of the processor 220.

According to an embodiment, when receiving power through the wired interface, the electronic device 201 may use the wired interface as a communication circuit. At this time, a separate communication circuit may be omitted. For example, the electronic device 201 may request, from the external power supply 202, a change in the voltage of the power by a predetermined change value through the wired interface. Depending on the implementation, the electronic device 201 may further include a separate communication circuit. The electronic device 201 may request, from the external power supply 202, the change in the voltage of the power by a predetermined change value through the communication circuit.

According to an embodiment, when receiving power wirelessly, the electronic device 201 may perform communication with the external power supply based on a communication method for wireless charging (e.g., amplitude shift keying (ASK) or frequency shift keying (FSK) method). For example, the electronic device 201 may include a separate communication circuit for wireless charging. For example, the electronic device 201 may request, from the external power supply 202, a change in the voltage of the power by the predetermined change value through the communication circuit.

According to an embodiment, the OVP 215 may perform a function of protecting the charger 250 from power supplied in a wired manner from an external power transmitter. For example, the OVP 215 may perform an overvoltage protection function. For example, the OVP 215 may cut off power having a voltage greater than a specified voltage.

According to an embodiment, the electronic device 201 may wirelessly receive power from an external wireless power transmitter (e.g., TX device) 203 through a coil 240. For example, the coil 240 may receive power using an electromagnetic induction or resonant induction method. AC power received through the coil 240 may be rectified into DC power through a rectifier circuit 245. In addition, the rectified DC power may be input or provided to a charger 250.

According to an embodiment, the charger 250 may receive the power provided from the external power supply 202 through the OVP 215. The charger 250 may generate power for charging a battery 270 based on the received power. For example, the charger 250 may support fast charging. Alternatively, the charger 250 may generate power to be provided to the system 280 based on the received power. For example, the charger 250 may convert the voltage of the received power into a voltage required by the battery 270 (e.g., 5V). For example, the charger 250 may convert the voltage of the received power into a voltage required by the system 280. For example, the charger 250 may convert the voltage of the received power into a specified ratio (e.g., a ratio of 4:1 ratio, a ratio of 3:1, or a ratio of 2:1). The charger 250 may supply power having the converted voltage to the battery 270. Alternatively, the charger 250 may supply power having the converted voltage to the system 280. For example, the charger 250 may include at least one of a direct charger, a switched capacitor voltage converter, or a switched capacitor voltage divider (SCVD). Examples and embodiments below use the terms "SCVD" and "charger SCVD", however it will be appreciated that the charger is not limited to an SCVD charger, and that any appropriate charger may be used.

According to an embodiment, the charger 250 may convert power stored in the battery 270 according to a specified ratio and supply or provide the converted power to the system 280. Alternatively, the charger 250 may convert the voltage of power provided from the outside according into a specified ratio and supply or provide the converted power to the system 280. For example, the charger 250 may convert power (e.g., power stored in the battery 270 or power provided from the outside) into a voltage required by the system 280 and supply or provide the converted power to the system 280.

According to an embodiment, the battery package 260 may include a protection circuit module (PCM) 265 and the battery 270.

According to an embodiment, the PCM 265 may perform a function of protecting the battery 270. For example, the PCM 265 may perform a battery protection function (e.g., over temperature protection (OTP), over voltage protection (OVP), under voltage protection (UVP), and/or over current protection (OCP)). For example, the PCM 265 may cut off power supplied to or discharged from the battery 270 based on performing the battery protection function.

According to an embodiment, the battery 270 may store power provided from the charger 250. For example, the battery 270 may include at least one battery cell.

According to an embodiment, the processor 220 may charge the battery 270 using the charger SCVD 250 based on receiving power (for example, receiving power wiredly) from the external power supply 202 supporting an adjustable voltage supply (AVS).

According to an embodiment, the processor 220 may identify (or monitor) a first voltage and a first current input to the charger SCVD 250. The processor 220 may identify (or monitor) a second voltage and a second current input to the battery 270. For example, the processor 220 may identify the first voltage and the first current input to the charger SCVD 250 and the second voltage and the second current input to the battery 270 while charging the battery 270 using the charger SCVD 250. For example, the processor 220 may identify the first voltage, the first current, the second voltage, and the second current based on data received from an AC-DC converter (ADC) or a fuel gauge of the charger SCVD 250.

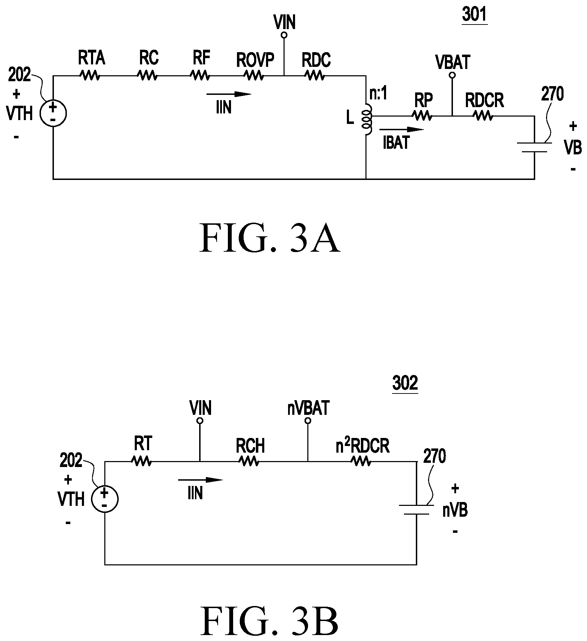

According to an embodiment, the processor 220 may calculate a resistance value (e.g., equivalent resistance value) corresponding to an input terminal of the charger SCVD 250 and a resistance value (e.g., equivalent resistance value) corresponding to an output terminal of the charger SCVD 250 based on identifying the first voltage, the first current, the second voltage, or the second current. For example, when the first voltage/first current is identified at a first time point, the processor 220 may identify a voltage difference/current difference between the first voltage/first current identified at a time point earlier than the first time point and the first voltage/first current at the first time point. In addition, when the second voltage/second current is identified at the first time point, the processor may identify a voltage difference/current difference between the second voltage/second current identified at a time point earlier than the first time point and the second voltage/second current at the first time point. The processor 220 may calculate a resistance value (e.g., first resistance) corresponding to an equivalent resistance from the power source of the external power supply 202 to the input terminal of the charger SCVD 250 and a resistance value (e.g., second resistance RCH and third resistance $n^2$RDCR of FIG. 3B) corresponding to the output terminal of the charger SCVD 250 using at least one of the identified voltage differences/current differences. For example, the first resistance RT may be an equivalent resistance from the power source of the external power supply 202 to the input terminal of the charger SCVD 250. For example, the second resistance RCH may be an equivalent resistance from the output terminal of the charger SCVD 250 to the input terminal of the battery 270. The third resistance $n^2$RDCR may be an internal resistance (or an equivalent resistance of an internal circuit) of the battery 270. For example, the power source of the external power supply 202 may be a power supply circuit of a TA device when the external power supply 202 is the TA device. Alternatively, the power source of the external power supply 202 may be the coil 240 of the electronic device 201 when the external power supply 202 wirelessly transmits power.

According to an embodiment, the processor 220 may identify or calculate a first change value for changing the voltage of power (e.g., power provided by the external power supply 202 or the wireless power transmitter 203) from the external power supply 202 or the wireless power transmitter 203 using a resistance value (e.g., the first resistance RT of FIG. 3B) corresponding to an equivalent resistance from the power source of the external power supply 202 to the input terminal of the charger SCVD 250 and a resistance value (e.g., the second resistance RCH and the third resistance $n^2RDCR$ of FIG. 3B) corresponding to the output terminal of the charger SCVD 250. For example, the processor 220 may, in response to identifying a voltage change condition for changing the voltage of the power from the external power supply 202, identify or calculate the first change value. For example, the voltage change condition may represent a condition for changing the voltage of the power provided by the external power supply 202. For example, the voltage change condition may include an operation of requesting a voltage change from the external power supply 202 to maintain a CV charging state or a CC charging state. For example, the first change value may include a value indicating how much the voltage of the power previously provided by the external power supply 202 will be changed. For example, the first change value may include a positive value or a negative value.

According to an embodiment, when the voltage change condition is identified, the processor 220 may request, from the external power supply 202, the change in the voltage of the power provided by the external power supply 202 by the first change value. The processor may request, from the external power supply 202, the change via the communication circuit (for example, through the connector 210). According to an embodiment, the processor 220 may request, from the external power supply, a change in the voltage of the power provided by the external power supply 202 into a voltage different from the voltage of the power previously provided by the external power supply 202 in consideration of the first change value.

According to an embodiment, when a load change by the system 280 is identified, the processor 220 may determine whether the calculated second resistance is affected by the load change. For example, the processor 220 may identify that the load change by the system 280 occurs based on the identifying that the calculated second resistance is lower than a reference value or identifying a load current corresponding to the load of the system 280. For example, the load change may occur when an application of the electronic device 201 is executed while charging the battery 270 using the charger 250.

According to an embodiment, based on the determination that the calculated second resistance is affected by the load change, the processor 220 may compensate for the second resistance reduced by the load change. For example, the processor 220 may calculate a compensated second resistance. The processor 220 may determine the first change value using the compensated second resistance. For example, in response to determining that the second voltage of the battery 270 is greater than a target input voltage of the battery 270 in a constant voltage (CV) charging state of the battery 270, the processor 220 may determine the first change value for satisfying a CV condition using the compensated second resistance. For example, in response to determining that a first current of the charger (e.g., SCVD) 250 is lower than a target input current of the charger 250 in a constant current (CC) charging state of the battery 270, the processor 220 may determine the first change value for satisfying a CC condition using the compensated second resistance.

According to an embodiment, based on identifying that the calculated second resistance is affected by both the load change and the voltage change, the processor 220 may compensate for the second resistance reduced by the load change and the voltage change. For example, the processor 220 may compensate for the second resistance in consideration of the load change and the voltage change.

According to an embodiment, when the load change by the system 280 is identified, the processor 220 may newly calculate the second resistance instead of compensating for the calculated second resistance. For example, based on identifying the load change, the processor 220 may newly identify the first voltage, the first current, second voltage, and the second current, and newly calculate (or identify) the first resistance, the second resistance, and the third resistance using at least one of the newly identified first voltage, first current, second voltage, and second current. The processor 220 may newly determine the first change value using the newly calculated resistances.

The external power supply 202 may transmit power having a voltage in the range of 9 to 20 V to the electronic device 201 based on an AVS method. However, unlike a programmable power supply (PPS) method, the AVS method does not have a current limit function. A minimum voltage change size of the AVS method is also specified as 100 mV.

For example, since the AVS method does not have the current limit function and the minimum voltage change size is 100 mV, which is larger than the existing PPS, the charging of the battery 270 may be cut off by the overvoltage protection function or the overcurrent protection function of the PCM 265 included in the battery package 260. In addition, a series resistance value (e.g., an equivalent resistance value) of a path from the external power supply 202 to the battery 270 may change. For example, in the AVS method, the overall resistance may be changed depending on the specifications and length of a cable 210 connected to the external power supply 202. In addition, the resistance value of the path from the external power supply 202 to the battery 270 may change depending on the temperature, and the equivalent resistance of the charger 250 and the equivalent resistance of the battery may change depending on the load by the system 280.

According to an embodiment, when the charger 250 charges the battery 270 using the AVS method, the electronic device 201 may request the voltage change from the external power supply 202 so that charging of the battery is not cut off by the overvoltage protection function or overcurrent protection function of the PCM 265. According to an embodiment, the electronic device 201 may identify (or calculate) the series resistance value (e.g., equivalent resistance value) of the path from the external power supply 202 to the battery 270, and, based on the identified series resistance value, request the voltage change from the external power supply 202 to satisfy conditions for a target voltage (or target input voltage) to be input to the battery 270 and a target current (or target input current) to be input to the charger 250.

FIGS. 3A and FIG. 3B are circuit diagrams illustrating an external power supply and an electronic device according to an embodiment.

Referring to FIG. 3A, according to an embodiment, a first equivalent circuit 301 may represent series resistances for a path from the external power supply 202 to the battery 270 in the electronic device 201 of FIG. 2.

According to an embodiment, the external power supply 202 may output power having a voltage of "VTH." The battery 270 may output a voltage of "VB." A first voltage input to the charger 250 may be "VIN," and a second voltage input to the battery 270 may be "VBAT." The first current input to the charger 250 may be "IIN," and the second current input to the battery 270 may be "IBAT."

According to an embodiment, as the series resistances, the first equivalent circuit 301 may include an equivalent resistance RTA for the external power supply 202, an equivalent resistance RC for a cable, an equivalent resistance RF for a flexible printed circuit board (FPCB) connected to the connector 210, an equivalent resistance ROVP for the OVP 215, an equivalent resistance RDC for the charger 250, an equivalent resistance RP for the PCM 265, and an equivalent resistance RDCR for the battery 270.

According to an embodiment, the first equivalent circuit 301 may include an inductor L (e.g., an inductor included in the charger 250) for changing a corresponding voltage at a specified ratio (n:1). For example, n may represent a natural number greater than or equal to 1. For example, the inductor L included in the first equivalent circuit 301 may be a model for an equivalent transformer for expressing a variable voltage, and the actual charger 250 may not include the inductor L.

Referring to FIG. 3B, according to an embodiment, a second equivalent circuit 302 may be an equivalent circuit corresponding to the first equivalent circuit 301 of FIG. 3A. The second equivalent circuit 302 may include a first resistance RT, a second resistance RCH, and a third resistance $n^2$RDCR. For example, the first resistance RT may be an equivalent resistance corresponding to the input terminal of the charger 250 (e.g., an equivalent resistance from the external power supply 202 to the input terminal of the charger 250). The second resistance RCH and the third resistance $n^2$RDCR may be equivalent resistances corresponding to the output terminal of the charger 250 (e.g., equivalent resistance from the output terminal of the charger 250 to the battery 270). For example, the first resistance RT may represent a resistance value that adds up the equivalent resistance RTA for the power of the external power supply 202 (e.g., the power supply circuit of the external power supply 202 or the coil 240 of the electronic device 201), the equivalent resistance RC for the cable, the equivalent resistance RF for the FPCB connected to the connector 210, and the equivalent resistance ROVP for the OVP 215. For example, when the electronic device 201 receives power wirelessly from the TX device 203, the first resistance RT may represent an equivalent resistance corresponding to the inverter, coil, and rectifier included in the electronic device 201. The second resistance RCH may represent a resistance value that adds up the equivalent resistance RDC for the charger 250 and the equivalent resistance $n^2$RP for the PCM 265. The third resistance $n^2$RDCR may represent an equivalent resistance to the battery 270.

According to an embodiment, the external power supply 202 may output power having an equivalent voltage of "VTH." The equivalent voltage of the battery 270 may be "nVB" (i.e. n * VB). A first voltage corresponding to the equivalent voltage input to the charger 250 may be "VIN," and a second voltage corresponding to the equivalent voltage input to the battery 270 may be "nVBAT" (i.e. n * VBAT). A first current corresponding to the equivalent current input to the charger 250 and the battery 270 may be "IIN."

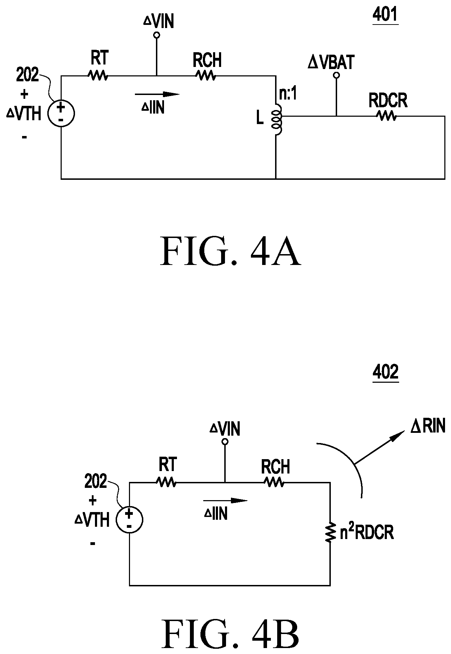

FIG. 4A and FIG. 4B are equivalent circuit diagrams illustrating an electronic device for changing the voltage of power output from an external power supply according to an embodiment.

Referring to FIG. 4A, according to an embodiment, a third equivalent circuit 401 may represent series resistances for a path from the external power supply 202 to the battery 270 when the external electronic device 202 changes a voltage. For example, a voltage VB output by the battery 270 may be constant (or assumed to be constant) when the voltage changes.

According to an embodiment, the third equivalent circuit 401 may include a first resistance RT, a second resistance RCH, and an equivalent resistance RDCR for the battery 270.

Referring to FIG. 4B, according to an embodiment, a fourth equivalent circuit 402 may be an equivalent circuit corresponding to the third equivalent circuit 401 of FIG. 4A. A fourth equivalent circuit 402 may include a first resistance RT, a second resistance RCH, and a third resistance $n^2$RDCR. For example, "△RIN" may be a resistance corresponding to a value obtained by adding the second resistance RCH and the third resistance $n^2$RDCR.

According to an embodiment, a change value of the power provided by the external power supply 202 may be represented as "ΔVTH." The change amount of the voltage input to the charger 250 may be represented as "ΔVIN." For example, the change amount ΔVIN of the voltage input to the charger 250 may be the change caused by the change value ΔVTH of the power provided by the external power supply 202. For example, the change amount ΔVIN of the voltage input to the charger 250 may be the change between an initial state (or previous measurement) and a current state (or measurement). The change amount of the voltage input to the battery 270 may be represented as "ΔVBAT." For example, the change amount of the voltage ΔVBAT input to the charger 250 may be the change caused by the change value ΔVTH of the power provided by the external power supply 202. For example, the change amount of the voltage ΔVBAT input to the charger 250 may be the change between an initial state (or previous measurement) and a current state (or measurement).

The embodiments of the voltage change of the external power supply 202 described below will be described based on the fourth equivalent circuit 402 of FIG. 4B.

Meanwhile, at least some of operations of the electronic device described below may be controlled or performed by the processor 220. However, for the convenience of description, the subject of the operations will be described as the electronic device 201.

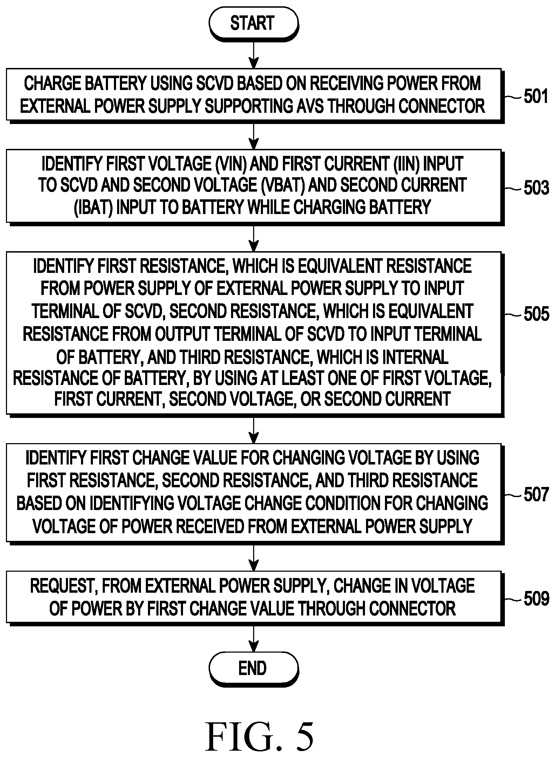

FIG. 5 is a flowchart illustrating a method for an electronic device to request, from an external power supply, a change in the voltage of power according to an embodiment.

Referring to FIG. 5, according to an embodiment, in operation 501, an electronic device (e.g., the electronic device 201 of FIG. 2) may charge a battery (e.g., the battery 270 of FIG. 2) using an SCVD (e.g., the charger 250 of FIG. 2) based on receiving power from an external power supply (e.g., the external power supply 202 of FIG. 2). For example, the external power supply may support an adjustable voltage supply (AVS). For example, the power may be received through a connector (e.g., the connector 210 of FIG. 2).

According to an embodiment, in operation 503, the electronic device 201 may identify a first voltage VIN and a first current IIN input to the SCVD 250 and a second voltage VBAT and a second current IBAT input to the battery 270 while charging the battery 270. For example, the electronic device 201 may identify the amount of change in voltage/current input to the SCVD 250 and the amount of change in voltage/current input to the battery 270.

According to an embodiment, in operation 505, the electronic device 201 may identify or calculate a first resistance RT, which is an equivalent resistance from the power supply of the external power supply 202 to the input terminal of the SCVD 250, a second resistance RCH, which is an equivalent resistance from the output terminal of the SCVD 250 to the input terminal of the battery 270, and a third resistance RDCR, which is an internal resistance of the battery 270, by using at least one of the first voltage VIN, the first current IIN, the second voltage VBAT, or the second current IBAT.

According to an embodiment, in operation 507, the electronic device 201 may identify a first change value for changing the voltage by using the first resistance RT, the second resistance RCH, and the third resistance RDCR based on identifying a voltage change condition for changing the voltage of the power received from the external power supply 202. For example, the electronic device 201 may determine, based on the voltage change condition being identified, that the voltage of the power received from the external power supply 202 should be changed by the first change value. According to an embodiment, the electronic device 201 may determine the first change value so that an expected input voltage of the battery 270 corresponds to (or matches, or equals) a target input voltage of the battery 270 when starting to charge the battery 270 by using the SCVD 250. According to an embodiment, the electronic device 201 may determine the first change value to satisfy a CV condition in response to identifying that the second voltage VBAT of the battery 270 is greater than the target input voltage of the battery 270 in a CV charging state of the battery 270. For example, the electronic device 201 may determine (or calculate) the first change value such that changing the voltage of the power received from the external power supply 202 by the first change value will satisfy the CV condition. According to an embodiment, the electronic device 201 may determine the first change value to satisfy a CC condition in response to identifying that the first current IIN of the SCVD 250 is lower than the target input current of the SCVD 250 in a CC charging state of the battery 270. For example, the electronic device 201 may determine (or calculate) the first change value such that changing the voltage of the power received from the external power supply 202 by the first change value will satisfy the CC condition.

According to an embodiment, in operation 509, the electronic device 201 may request, from the external power supply 202, a change in the voltage of the power by the first change value. For example, the request may be made via the communication circuit (e.g. through the connector 210). The external electronic device 202 may transmit power (e.g., voltage and/or current) whose voltage has been changed by the first change value to the electronic device 201 based on the request being identified. The electronic device 201 may receive power (e.g., voltage and/or current) whose voltage has been changed by the first change value from the external electronic device 202 based on the request being identified. According to an embodiment, after starting to charge the battery 270 using the SCVD 250, by the power transmitted by the external electronic device 202, power of a voltage that is not higher than a threshold for overvoltage protection of the PCM 265 may be provided to the battery 270. According to an embodiment, power of a voltage corresponding to the target input voltage of the battery 270 may be provided to the battery 270 by the power transmitted by the external electronic device 202 in the CV charging state of the battery 270. According to an embodiment, power of a current corresponding to the target input current of the charger 250 may be provided to the charger 250 by the power transmitted by the external electronic device 202 in the CC charging state of the battery 270.

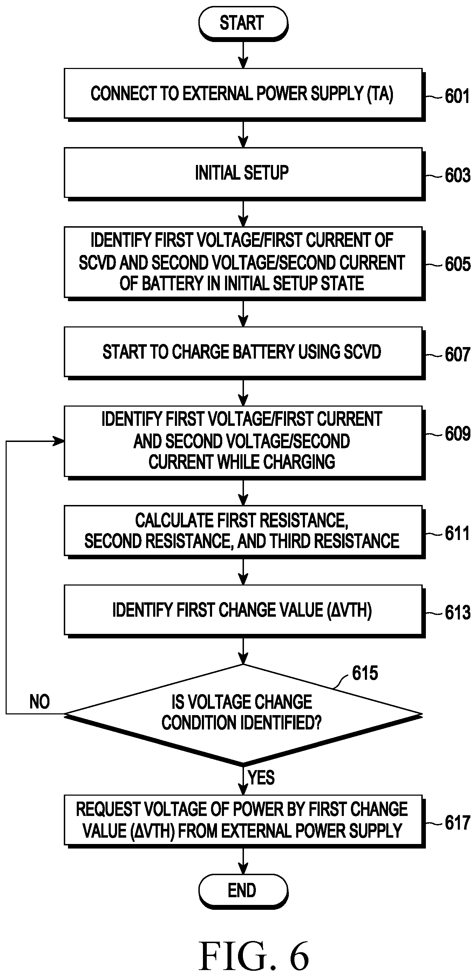

FIG. 6 is a flowchart more specifically illustrating a method for an electronic device to request, from an external power supply, a change in the voltage of power according to an embodiment.

Referring to FIG. 6, according to an embodiment, in operation 601, an electronic device (e.g., the electronic device 201 of FIG. 2) may be wiredly (or wirelessly) connected to an external power supply (TA) (e.g., the external power supply 202 of FIG. 2).

According to an embodiment, in operation 603, the electronic device 201 may perform an initial setup for receiving power. For example, the electronic device 201 may input an initial current and an initial voltage according to the initial setup to the charger 250.

According to an embodiment, in operation 605, the electronic device 201 may identify a first voltage/first current input to the SCVD 250 and a second voltage/second current input to the battery 270 in the initial setup state before starting to charge the battery using an SCVD (e.g., the charger 250 of FIG. 2).

According to an embodiment, in operation 607, the electronic device 201 may start to charge the battery 270 using the SCVD 250.

According to an embodiment, in operation 609, the electronic device 201 may identify the first voltage/first current input to the SCVD 250 and the second voltage/second current input to the battery 270 while charging the battery 270. For example, the electronic device 201 may identify the first voltage/first current and the second voltage/second current at a designated period or in real time. For example, the electronic device 201 may identify or calculate the amount of change in the first voltage/first current input to the SCVD 250 in the initial setup state after the charging starts, and the amount of change in the second voltage/second current input to the battery 250.

According to an embodiment, in operation 611, the electronic device 201 may calculate a first resistance RT, a second resistance RCH, and a third resistance n²RDCR while charging the battery 270. For example, the electronic device 201 may calculate or identify the first resistance RT, the second resistance RCH, and the third resistance n²RDCR using at least one of the first voltage/first current input to the SCVD 250, the second voltage/second current input to the battery 270, the amount of change in the first voltage/first current, and the amount of change in the second voltage/current while charging the battery 270.

For example, as in Equation 1, the electronic device 201 may calculate the first resistance RT using VTA(0) according to the initial setup (e.g., a voltage initially specified to the SCVD before charging starts), ΔVTAtotal(N) representing accumulated ΔVTA (where N denotes an accumulated voltage change order/index and is a natural number greater than or equal to 1), and the first voltage VIN (i.e. the first voltage VIN input to the SCVD). For example, VTA(0) may be the initial voltage of the charger 250 described in operation 603.

[Equation 1]

$$RT = \frac{VTA(0) + \Delta VTAtotal(N) - VIN}{IIN}$$

For example, as in Equation 2, the electronic device 201 may calculate the second resistance RCH using the first voltage VIN, the first current IIN, and the second voltage (e.g., n*VBAT).

[Equation 2]

$$RCH = \frac{VIN - nVBAT}{IIN}$$

For example, as in Equation 3, the electronic device 201 may calculate the third resistance RDCR using the change amount ΔVIN of the first voltage VIN, the change amount ΔIIN of the first current IIN, and the second resistance RCH. For example, the change amount ΔVIN of the first voltage VIN may be determined as the difference between the previous (or initial) first voltage and the current first voltage, i.e. ΔVIN(N) = VIN(N) - VIN(N-1). Similarly, the change amount ΔIIN of the first current IIN may be determined as the difference between the previous (or initial) first current and the current first current, i.e. ΔIIN(N) = IIN(N) - IIN(N-1)

[Equation 3]

$$RDCR = \frac{\Delta RIN(N) - RCH}{n^2}$$

$$\Delta RIN(N) = \frac{\Delta VIN(N)}{\Delta IIN(N)}$$

Alternatively, as in Equation 4, the electronic device 201 may calculate the third resistance RDCR when the change amount ΔVBAT of the second voltage VBAT and the change amount ΔIBAT of the second current IBAT are identified. For example, the change amount ΔVBAT of the second voltage VBAT may be determined as the difference between the previous (or initial) second voltage and the current second voltage, i.e. ΔVBAT(N) = VBAT(N) - VBAT(N-1). Similarly, the change amount ΔIBAT of the second current IBAT may be determined as the difference between the previous (or initial) second current and the current second current, i.e. ΔIBAT(N) = IBAT(N) - IBAT(N-1)

[Equation 4]

$$RDCR(N) = \frac{\Delta VBAT(N)}{\Delta IBAT(N)}$$

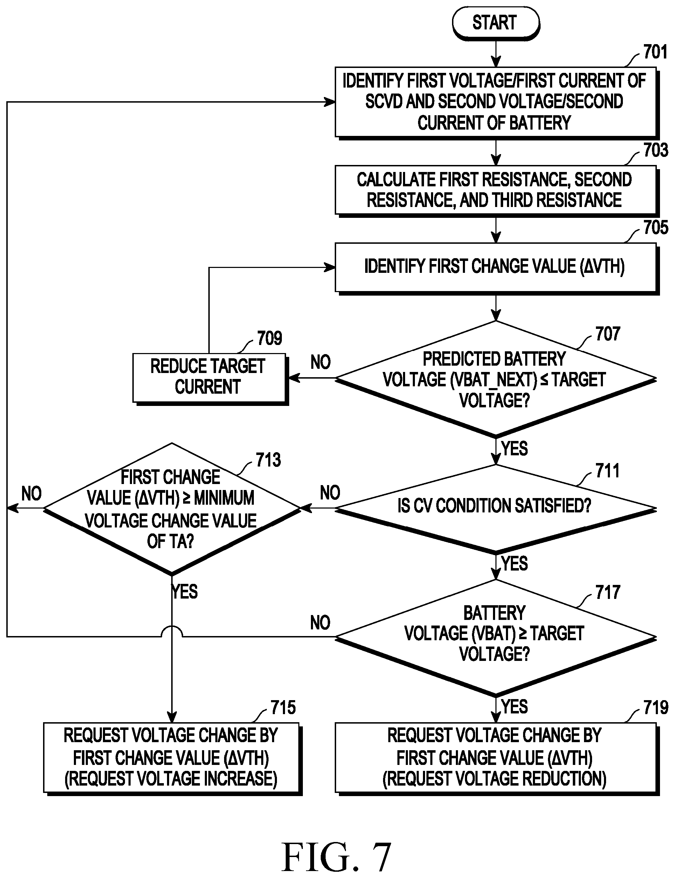

According to an embodiment, in operation 613, the electronic device 201 may identify a first change value ΔVTH for requesting a voltage change from the external power supply 202 using the first resistance RT, the second resistance RCH, and the third resistance RDCR. For example, a method of identifying the first change value ΔVTH will be specifically described in FIG. 7.

According to an embodiment, in operation 615, the electronic device 201 may determine whether a voltage change condition is identified or detected. For example, when the voltage change condition is not identified or detected (NO in operation 615), the electronic device 201 may not request the voltage change from the external power supply 202. In addition, the electronic device 201 may identify the first voltage/first current and the second voltage/second current again. For example, the electronic device 201 may re-identify the first voltage/first current and the second voltage/second current according to a designated period.

According to an embodiment, when it is determined that the voltage change condition is identified or detected (YES in operation 615), in operation 617, the electronic device 201 may request, from the external power supply 202, a change in the voltage of the power by the first change value ΔVTH. The external power supply 202 may transmit power whose voltage has been changed by the first change value ΔVTH to the electronic device 201.

FIG. 7 is a flowchart illustrating a method for an electronic device to determine a change value for requesting, from an external power supply, a change in the voltage of power according to an embodiment.

Referring to FIG. 7, according to an embodiment, in operation 701, an electronic device (e.g., the electronic device 201 of FIG. 2) may identify a first voltage/first current of an SCVD (e.g., the charger 250 of FIG. 2) and a second voltage/second current of a battery (e.g., battery 270 of FIG. 2). For example, the electronic device 201 may identify or calculate a change amount of a first voltage/first current input to the SCVD 250 and a change amount of a second voltage/second current input to the battery 270.

According to an embodiment, in operation 703, the electronic device 201 may calculate a first resistance RT, a second resistance RCH, and a third resistance RDCR. For example, the first resistance RT, the second resistance RCH, and the third resistance RDCR may be calculated based on the description made in FIG. 6.

According to an embodiment, in operation 705, the electronic device 201 may identify or calculate a first change value ΔVTH. For example, the electronic device 201 may calculate the first change value ΔVTH as in Equation 5. Here, Itarget denotes a target input current to the SCVD 250.

[Equation 5]

$$\Delta VTH = (RT + RCH + n^2 RDCR) \times (Itarget - IIN)$$

According to an embodiment, when receiving power with a voltage changed by the first change value ΔVTH from the external power supply 202, the electronic device 201 may predict or identify a second voltage (hereinafter, an expected battery voltage VBAT_NEXT) input to the battery 270. For example, the electronic device 201 may calculate the expected battery voltage VBAT_NEXT or VBATNEXT as in Equation 6. Here, N and n denote natural numbers greater than or equal to 1, and N denotes an accumulated voltage change order/index.

[Equation 6]

$$VBATNEXT(N) = nRDCR\big(Itarget - IIN(N-1)\big) + VBAT(N-1)$$

According to an embodiment, in operation 707, the electronic device 201 may determine whether the expected battery voltage VBAT_NEXT is less than or equal to the target input voltage of the battery 270.

According to an embodiment, when it is determined that the expected battery voltage VBAT_NEXT is not less than or equal to the target input voltage of the battery 270 (NO of operation 707), in operation 709, the electronic device 201 may reduce the target input current Itarget. For example, when it is determined that the expected battery voltage VBAT_NEXT exceeds the target input voltage of the battery 270, the electronic device 201 may newly configure (e.g., reduce) the target input current Itarget to satisfy the condition of operation 707 to change the first change value. For example, the electronic device 201 may configure a new target input current Itargetnew as in Equation 7. Here, VFLOAT denotes the target input voltage of the battery 270.

[Equation 7]

$$Itargetnew = IIN + \frac{VBATNEXT - VFLOAT}{nRDCR}$$

Next, the electronic device 201 may re-identify the first change value ΔVTH based on the new target input current Itargetnew. For example, the first change value ΔVTH may be reduced to lower than before.

According to an embodiment, when it is determined that the expected battery voltage VBAT_NEXT is less than or equal to the target input voltage of the battery 270 (YES in operation 707), in operation 711, the electronic device 201 may determine whether the charging state of the battery 270 satisfies a CV condition. For example, the CV condition may be satisfied when the expected battery voltage VBAT_NEXT of the battery 270 is greater than or equal to the target input voltage.

According to an embodiment, when it is determined that the charging state of the battery 270 does not satisfy the CV condition (or, when the charging state satisfies a CC condition) (NO in operation 711), in operation 713, the electronic device 201 may determine whether the first change value ΔVTH is equal to or greater than a minimum voltage change value (e.g., 100 mV) of the external power supply TA 202.

According to an embodiment, when it is determined that the first change value ΔVTH is not equal to or greater than the minimum voltage change value of the external power supply TA 202 (NO in operation 713), the electronic device 201 may re-identify the first voltage/first current of the SCVD 250 and the second voltage/second current of the battery 270 without requesting the voltage change from the external power supply 202.

According to an embodiment, when it is determined that the first change value ΔVTH is equal to or greater than the minimum voltage change value of the external power supply TA 202 (YES in operation 713), in operation 715, the electronic device 201 may request, from the external power supply TA 202, a change in the voltage by the first change value ΔVTH. For example, the first change value ΔVTH may be determined as in Equation 8. For example, the first change value ΔVTH may be rounded down in units of 100 mV. For example, in the CC charging state, Itargetnew(N)=Itarget=IIN(N) may be maintained.

[Equation 8]

$$\Delta VTH = Floor \frac{\Delta VTH}{100mV} \times 100mV$$

For example, the electronic device 201 may request an increase in the voltage by the first change value ΔVTH from the external power supply TA 202.

According to an embodiment, when it is determined that the charging state of the battery 270 satisfies the CV condition (YES in operation 711), in operation 717, the electronic device 201 may determine whether the second voltage VBAT input to the battery 270 is equal to or greater than the target input voltage of the battery 270.

According to an embodiment, when it is determined that the second voltage VBAT is equal to or greater than the target input voltage of the battery 270 (YES in operation 717), in operation 719, the electronic device 201 may request, from the external power supply TA 202, the change in the voltage by the first change value △VTH. For example, the first change value △VTH may be determined as in Equation 9. For example, the first change value △VTH may be rounded up in units of 100 mV. For example, in the CV charging state, Itargetnew(N) denotes a no-load value of IIN(N).

[Equation 9]

$$\Delta VTH = -Ceil\frac{\Delta VTH}{100mV} \times 100mV$$

For example, the electronic device 201 may request, from the external power supply TA 202, a reduction in the voltage by the first change value △VTH.

According to an embodiment, when it is determined that the second voltage VBAT is less than the target input voltage of the battery 270 (NO in operation 717), the electronic device 201 may re-identify the first voltage/first current of the SCVD 250 and the second voltage/second current of the battery 270 without requesting a voltage change from the external power supply 202.

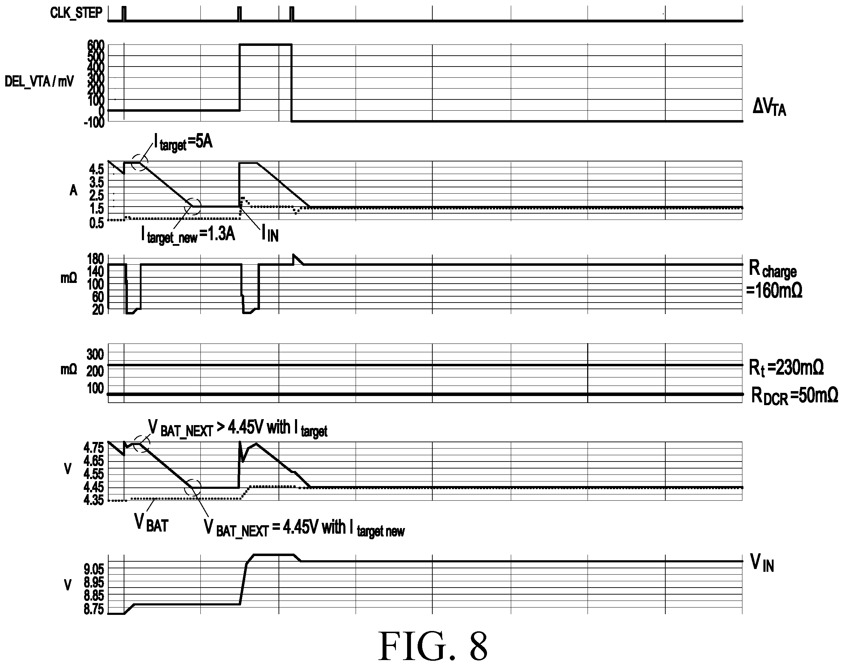

FIG. 8 illustrates graphs for explaining a method for an electronic device to determine a change value for requesting a voltage change from an external power supply when the electronic device starts to charge a battery using an SCVD according to an embodiment.

Referring to FIG. 8, according to an embodiment, an electronic device (e.g., the electronic device 201 of FIG. 2) may newly configure a target input current Itarget=5A when it is determined that an expected battery voltage VBAT_NEXT is greater than the target input voltage (e.g., 4.45V). The electronic device 201 may configure a new target input current Itarget_new=1.3A so that the expected battery voltage VBAT_NEXT corresponds to (or matches or equals) the target input voltage. The electronic device 201 may determine a first change value △VTH based on the new target input current Itarget_new=1.3A. For example, the first change values △VTH may be sequentially 0mV, 600mV, and -100mV.

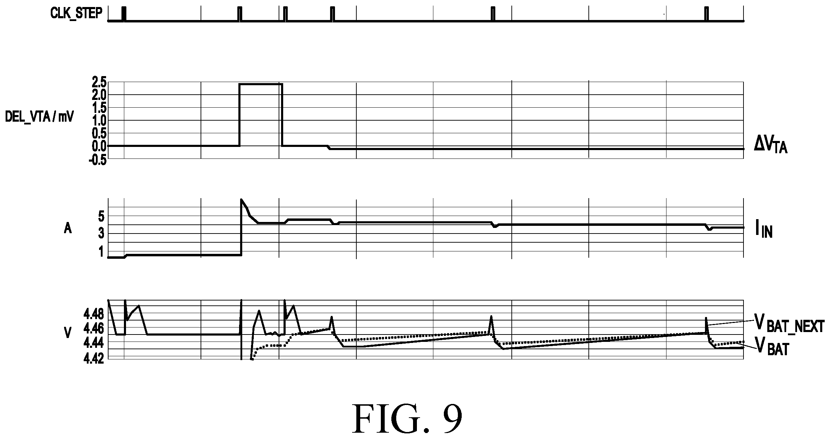

FIG. 9 illustrates graphs for explaining a method for an electronic device to determine a change value for requesting a voltage change from an external power supply while the electronic device is in a constant voltage (CV) charging state of a battery according to an embodiment.

Referring to FIG. 9, according to an embodiment, an electronic device (e.g., the electronic device 201 of FIG. 2) may identify an expected battery voltage VBAT_NEXT expected to be input to the battery 270 in a CV charging state of the battery 270. When it is determined that the expected input voltage of the battery 270 is greater than a target input voltage (e.g., 4.45 V), a first change value △VTH may be determined so that the expected input voltage of the battery 270 corresponds to (or matches or equals) the target input voltage. By requesting the first change value, the voltage of the power transmitted by the external power supply 202 may be reduced. Accordingly, a first current IIN input to the charger 250 may be reduced when the voltage changes. For example, since the expected input voltage of the battery 270 corresponds to (or matches or equals) the second voltage input to the battery 270 in the CV charging state of the battery 270, a new target current Itarget_new may match (or equal) the first current IIN input to the charger 250.

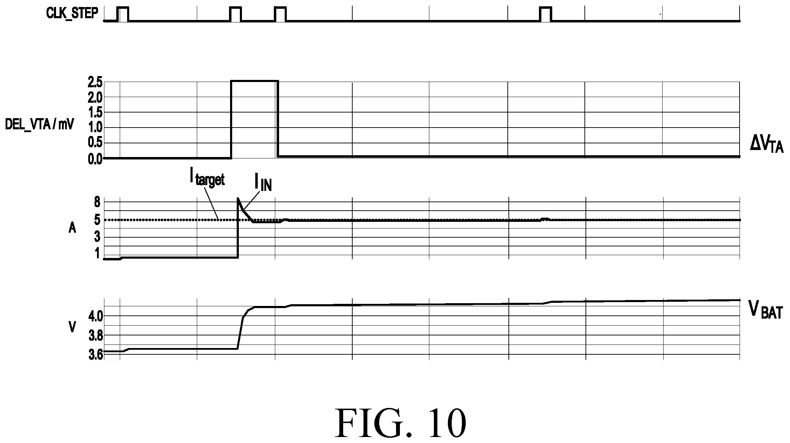

FIG. 10 illustrates graphs for explaining a method for an electronic device to determine a change value for requesting a voltage change from an external power supply when the electronic device is in a constant current (CC) charging state of a battery according to an embodiment.

Referring to FIG. 10, according to an embodiment, an electronic device (e.g., the electronic device 201 of FIG. 2) may identify a first current IIN input to the charger 250 in a CC charging state of the battery 270. When it is determined that the first current IIN is less than a target input current (e.g., 5A), a first change value △VTH may be determined so that the first current IIN of the charger 250 corresponds to (or matches or equals) the target input current. By requesting the first change value, the voltage of the power transmitted by the external power supply 202 may be increased. Accordingly, the first current IIN input to the charger 250 may be controlled to correspond to (or match or equal) the target input current. Next, the first current IIN may be gradually reduced according to the charging of the battery 270, and the first current may be increased to a target input current based on controlling the first change value. For example, in the CC charging state of the battery 270, the new target current Itarget_new of the charger 250 may match (or equal) the existing target current Itarget and the first current IIN input to the charger 250.

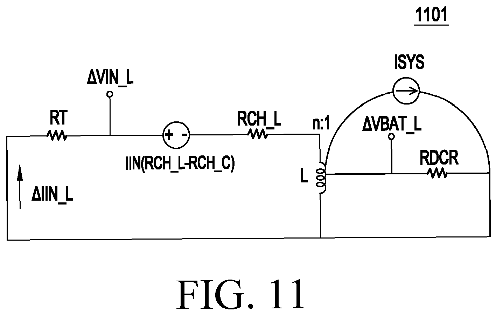

FIG. 11 is an equivalent circuit diagram illustrating an electronic device when a load change occurs in a system according to an embodiment.

Referring to FIG. 11, according to an embodiment, a fifth equivalent circuit 1101 may represent series resistances for a path from the external power supply 202 to the battery 270 when a load changes due to a system (e.g., the system 280 of FIG. 2). For example, a voltage VB output by the battery 270 may be constant (or assumed to be constant) when the voltage changes.

According to an embodiment, the fifth equivalent circuit 1101 may include a first resistance RT, a second resistance RCH_L, and an equivalent resistance RDCR for the battery 270. For example, the second resistance RCH_L may have a resistance value affected by a load change and may be different from the second resistance RCH of FIG. 4A.

According to an embodiment, the amount of change of the first voltage input to the charger 250 may be "ΔVIN_L," and the amount of change of the second voltage input to the battery 270 may be "ΔVBAT_L." The amount of change of the first current input to the charger 250 may be "ΔIIN_L." The current due to the load change of the system 280 may be ISYS.

According to an embodiment, a voltage IIN*(RCH_L-RCH_C) by the load change may be applied, and RCH_C may be a resistance obtained by compensating for RCH_L by considering the load change.

According to an embodiment, the fifth equivalent circuit 1101 may include an inductor L (e.g., an inductor included in the charger 250) for changing a corresponding voltage at a specified ratio (n:1). For example, n may represent a natural number greater than or equal to 1. For example, the inductor L included in the fifth equivalent circuit 1101 may be a model for an equivalent transformer for expressing a variable voltage, and the actual charger 250 may not include the inductor L.

A method of determining resistance values below will be described based on the equivalent circuit 402 of FIG. 4B and the equivalent circuit 1101 of FIG. 11.

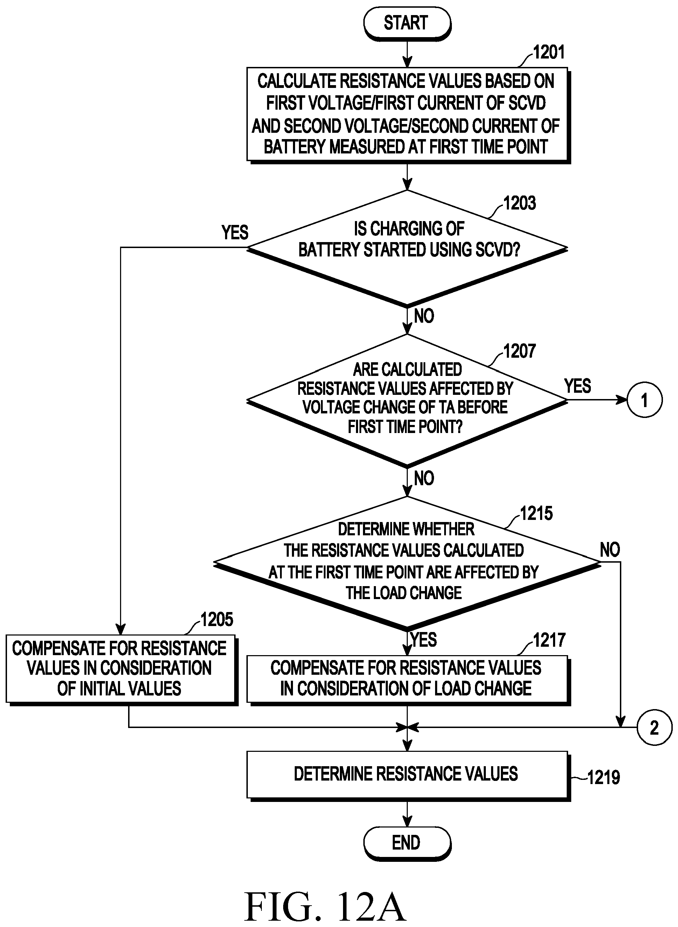

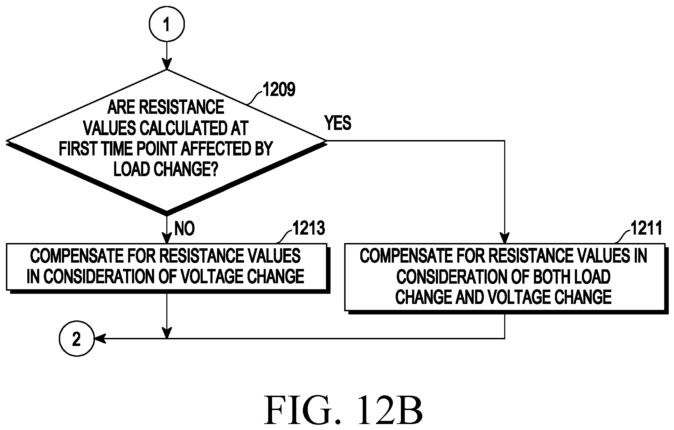

FIG. 12A and FIG. 12B are flowcharts illustrating a method for an electronic device to determine a resistance value for each state according to an embodiment.

Referring to FIGS. 12A and 12B, according to an embodiment, in operation 1201, an electronic device (e.g., the electronic device 201 of FIG. 2) may measure a first voltage/first current of an SCVD (e.g., the charger 250 of FIG. 2 ) and a second voltage/second current of a battery (e.g., the battery 270 of FIG. 2 ) measured at a first time point based on receiving power from an external power supply (e.g., the external power supply 202 of FIG. 2), and calculate resistance values (e.g., a first resistance RT, a second resistance RCH, and a third resistance RDCR) based on the measured first voltage/first current and second voltage/second current. For example, the resistance values may be calculated using at least one of Equation 1 to 4.

According to an embodiment, in operation 1203, the electronic device 201 may determine whether to start to charge the battery 270 using the SCVD 250.

According to an embodiment, when it is determined to start to charge the battery 270 using the SCVD 250 (YES in operation 1203), in operation 1205, the electronic device 201 may compensate for the resistance values by considering an initial value (or voltage/current according to the initial setup).

For example, the compensated first resistance RT(0) may be calculated as in Equation 10. For example, VTH(0) may be a starting voltage of the external power supply 202 according to the initial setup, and VIN(0) and IIN(0) may be a first voltage and first current input to the charger 250 after the start of charging the battery 270.

[Equation 10]

$$RT(0) = \frac{VTA(0) - VIN(0)}{IIN(0)}$$

For example, the compensated second resistance RCH(0) may be calculated as in Equation 11. For example, VBAT(0) may be a second voltage input to the battery 270 after the start of charging, and VIN(0) and IIN(0) may be a first voltage and first current input to the charger 250 after the start of charging of the battery 270.

[Equation 11]

$$RCH(0) = \frac{VIN(0) - nVBAT(0)}{IIN(0)}$$

For example, the compensated third resistance RDCR(0) may be calculated as in Equation 12. For example, VBAT(0) and IBAT(0) may be a second voltage and second current input to the battery 270 after the start of charging, and VBAT(-1) and IBAT(-1) may be the second voltage and second current input to the battery 270 before the start of charging.

[Equation 12]

$$RDCR(0) = \frac{VBAT(0) - VBAT(-1)}{IBAT(0) - IBAT(-1)}$$

According to an embodiment, when it is determined that charging of the battery 270 is not started using the SCVD 250 (NO in operation 1203), in operation 1207, the electronic device 201 may determine whether the calculated resistance values have been affected by a voltage change of the external power supply TA 202 before a first time point. For example, when there has been the voltage change of the external power supply TA 202 since a measurement time point (e.g., a voltage/current measurement time point) before the first time point, the electronic device 201 may determine that the calculated resistance values have been affected by the voltage change.

According to an embodiment, when it is determined that the calculated resistance values are affected by the voltage change of the external power supply TA 202 before the first time point (YES in operation 1207), in operation 1209, the electronic device 201 may determine whether the calculated resistance values at the first time point are affected by the load change. For example, when the load change occurs at the first time point or the measurement time point before the first time point (e.g., a voltage/current measurement time point), the electronic device 201 may determine that the calculated resistance values are affected by the load change. For example, the electronic device 201 may determine that the calculated resistance values are affected by the load change based on determining that the calculated second resistance is lower than a reference value, identifying a load current corresponding to the load of the system 280, or determining that a value nIIN obtained by multiplying the first current IIN by n times.

According to an embodiment, when it is determined that the resistance values calculated at the first time point are affected by the load change (YES in operation 1209), in operation 1211, the electronic device 201 may compensate for the resistance values by considering both the load change and the voltage change. For example, the second resistance RCHC among the resistance values may be compensated as in Equation 13. The first resistance RT and the third resistance RDCR among the resistance values may not require compensation. Here, i and M denote natural numbers greater than or equal to 1, i denotes the number of voltage changes after the load change occurs, and M denotes the number of voltage/current measurements after the load change occurs. ΔIINSL denotes the amount of change in the first voltage of the charger 250 affected by the load change and the voltage change. For example, in Equation 13 below, RCHL may be the same as RCH_L of FIG. 11, and RCHC may be the same as RCH_C of FIG. 11.

[Equation 13]

$$RCHC = \frac{\left((RCHL + RT) \times \left(\Delta IINSL(M) - \frac{\Delta VTH(i)}{RT + RCHL + n^2RDCR}\right)\right) + \left(nRDCR \times \left(\Delta IISNL(M) - n \times \frac{\Delta VTH(i)}{RT + RHCL + n^2RDCR}\right)\right)}{IIN(M)|_{M-1}} + RCHL$$

According to an embodiment, when it is determined that the resistance values calculated at the first time point are not affected by the load change (NO in operation 1209), in operation 1213, the electronic device 201 may compensate for the resistance values by considering the voltage change. For example, the resistance values may be calculated based on the previous measurement values (e.g., voltage/current) and the measurement values (e.g., voltage/current) at the first time point. For example, the resistance values may be calculated or compensated by using at least one of Equations 1 to 4.

According to an embodiment, when it is determined that the calculated resistance values are not affected by the voltage change of the external power supply TA 202 before the first time point (NO in operation 1207), in operation 1215, the electronic device 201 may determine whether the resistance values calculated at the first time point are affected by the load change.

According to one embodiment, when it is determined that the resistance values calculated at the first time point are affected by the load change (YES in operation 1215), in operation 1217, the electronic device 201 may compensate for the resistance values by considering the load change. For example, the second resistance RCH among the resistance values may be compensated as in Equation 13. For example, the compensated second resistance RCH may be determined by using the second resistance RCHL due to the load influence, the amount of change ΔIINL of the first current due to the load influence, the first resistance RT, and the third resistance nRDCR. Among the resistance values, the first resistance RT and the third resistance RDCR may not require compensation.

[Equation 14]

$$RCH = \frac{(RCHL \times \Delta IINL) + (RT \times \Delta IINL) + (nRDCR \times \Delta IINL)}{IIN} + RCHL$$

According to an embodiment, the electronic device 201 may determine the resistance values in operation 1219. For example, the electronic device 201 may not use the resistance values that differ by a reference value or more among the compensated or calculated resistance values. In this case, as to the resistance values that differ by the reference value or more, the previously measured resistance values or an average of the previously measured resistance values may be used.

The resistance values determined in operation 1219 may be used to determine the first change value (for example, as in operations 507, 613, and 705).

For example, the electronic device may compare the resistance values calculated in operation 1201 with the compensated resistance values. If the calculated resistance values differ by greater than or equal to a reference value from the compensated resistance values, with the compensated resistance values, the previously measured resistance values or an average of the previously measured resistance values may be used. Otherwise, the compensated resistance values may be used to determine the resistance values.

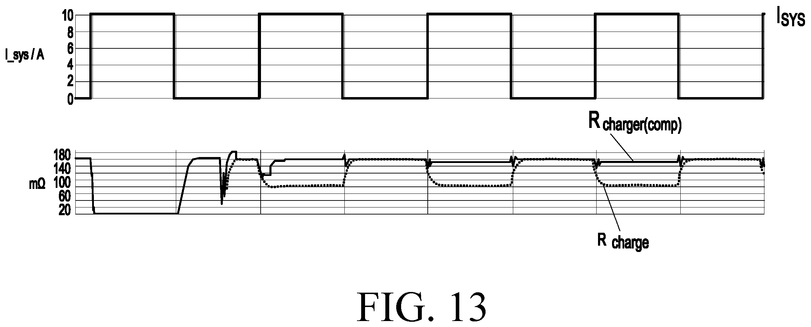

FIG. 13 illustrates graphs for explaining a method for an electronic device to compensate for resistance values when a load change is detected according to an embodiment.

Referring to FIG. 13, according to an embodiment, when a load change ISYS occurs, a second resistance Rcharge (e.g., the second resistance RCH) (e.g., about 80 mΩ) calculated by an electronic device (e.g., the electronic device 201 of FIG. 2) may be smaller than an actual resistance value (e.g., about 160 mΩ).

According to an embodiment, the electronic device 201 may compensate for the second resistance Rcharge by considering the influence of the load change, as described in FIGS. 12A and 12B. For example, the electronic device 201 may compensate for the second resistance Rcharge reduced by the load change and determine a first change value using the compensated second resistance Rcharge(comp). For example, the compensated second resistance Rcharge(comp) may be approximately the same as or similar to the actual resistance value (e.g., 160 mΩ).

Through the above-described method, the electronic device 201 may determine the first change value using the second resistance Rcharge(comp) that is approximately similar to the actual resistance value (e.g., 160 mΩ).

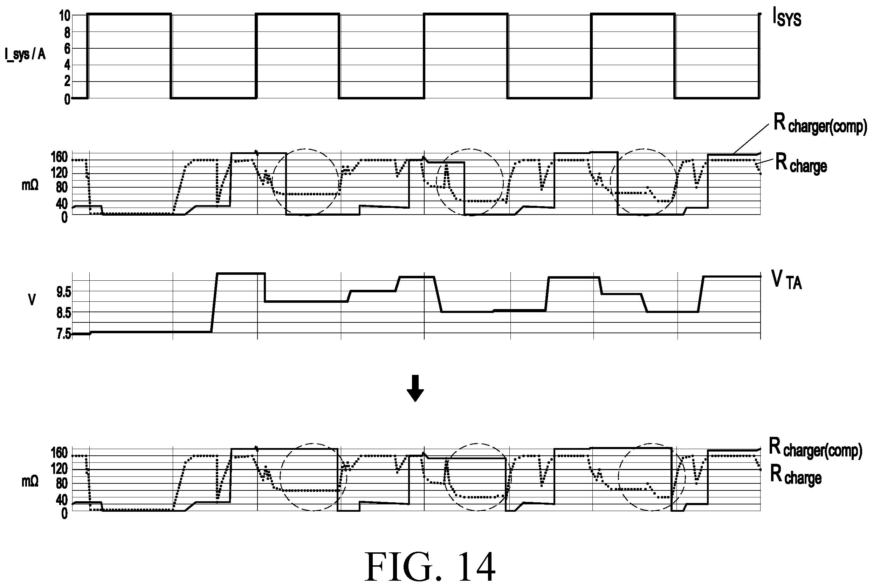

FIG. 14 illustrates graphs for explaining a method for an electronic device to compensate for resistance values according to an embodiment.

Referring to FIG. 14, according to an embodiment, the electronic device 201 may compensate for the second resistance Rcharge by considering the influence of the load change, as described in FIG. 12A and FIG. 12B. For example, the electronic device 201 may compensate for the second resistance Rcharge affected by the load change. For example, the compensated second resistance Rcharge(comp) may have a resistance value that is increased compared to the second resistance Rcharge before the compensation in a section where the load influence occurs.

Through the above-described method, the electronic device 201 may determine the first change value by using the second resistance Rcharge(comp) that is approximately similar to the actual resistance value (e.g., 160 mΩ).

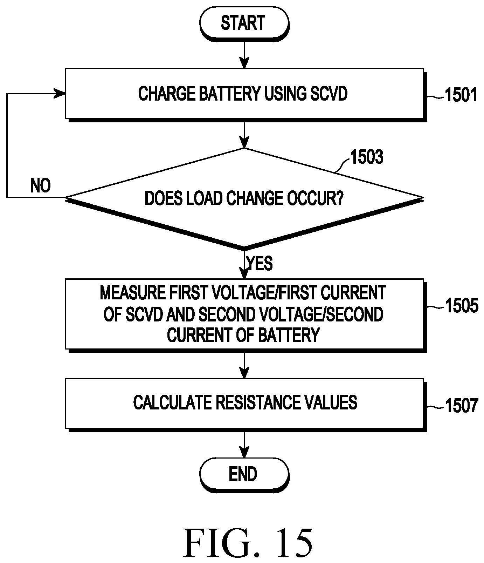

FIG. 15 is a flowchart illustrating a method for an electronic device to determine a resistance value when a load change is detected according to an embodiment.

Referring to FIG. 15, according to an embodiment, in operation 1501, an electronic device (e.g., the electronic device 201 of FIG. 2) may charge a battery (e.g., the battery 270 of FIG. 2) using an SCVD (e.g., the charger 250 of FIG. 2).

According to an embodiment, in operation 1503, the electronic device 201 may determine whether a load change has occurred by a system (e.g., the system 280 of FIG. 2). For example, the electronic device 201 may determine that the load change has occurred by the system 280 based on identifying that the calculated second resistance is lower than a reference value or identifying a load current corresponding to the load of the system 280.

In an embodiment, when it is determined that no load change has occurred (NO in operation 1503), the electronic device 201 may charge the battery 270 using the charger 250 without performing additional operations for the load change.

According to an embodiment, when it is determined that the load change has occurred (YES in 1503), in operation 1505, the electronic device 201 may re-measure the first voltage/first current of the SCVD 250 and the second voltage/second current of the battery 270.

According to an embodiment, in operation 1507, the electronic device 201 may re-calculate the resistance values based on the re-measured voltage/current. The electronic device 201 may determine a first change value for requesting a voltage change from the external power supply 202 based on the re-calculated resistance values.

Through the above-described method, the electronic device 201 may determine the first change value using resistance values that are not affected by the load change (e.g., the second resistance RCH).

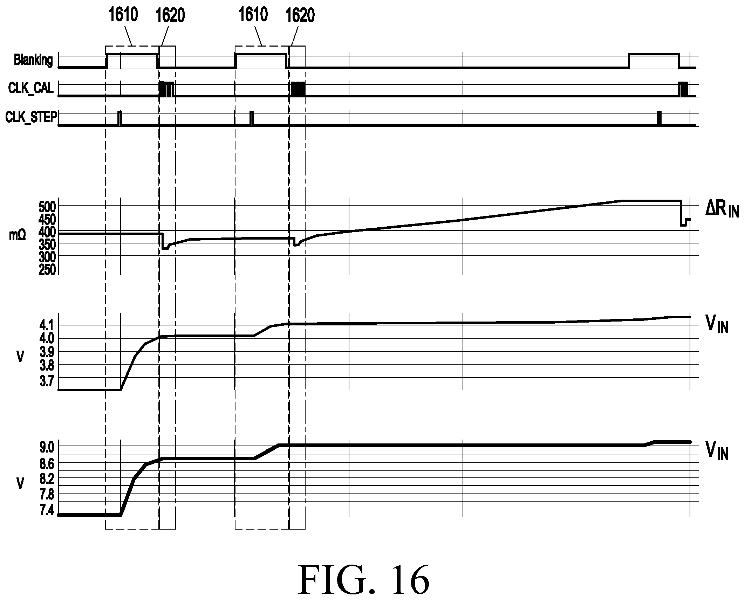

FIG. 16 illustrates graphs for explaining a method for an electronic device to determine a time point when a resistance value is calculated according to an embodiment.

Referring to FIG. 16, according to an embodiment, an electronic device (e.g., the electronic device 201 of FIG. 2) may configure a blanking period 1610 after requesting a voltage change from an external power supply (e.g., the external power supply 202 of FIG. 2). For example, the blanking period 1610 may be configured based on a designated time. The electronic device 201 may measure a first voltage VIN and a first current (e.g., IIN of FIG. 3A) of an SCVD (e.g., the charger 250 of FIG. 2) after the blanking period 1610. For example, the electronic device 201 may re-measure the first voltage VIN and the first current of the SCVD 250 after a designated time corresponding to the blanking period 1610 after requesting the voltage change from the external power supply 202. For example, the electronic device 201 may measure the first voltage VIN and the first current IIN of the SCVD 250 in a measurement period 1620, and calculate or identify the amount of change $\Delta$RIN of an equivalent resistance corresponding to the output terminal of the charger 250 based on the measured first voltage VIN and first current IIN. For example, the measurement period 1620 may be after the blanking period 1610.

According to an embodiment, the electronic device 201 may adjust the designated time corresponding to the blanking period 1610 to be shorter than the reference time when the battery (e.g., the battery 270 of FIG. 2) is in a CC charging state. For example, the reference time may be a predetermined time. For example, since the amount of change of the first current IIN is proportional to the first change value $\Delta$VTH in the CC charging state, the designated time corresponding to the blanking period 1610 may be adjusted shorter when the first change value $\Delta$VTH is low. For example, since the amount of change of the equivalent resistance RIN corresponding to the output terminal of the charger 250 may be small in the CC charging state, the electronic device 201 may adjust the designated time corresponding to the blanking period 1610 to be shorter. Through this, the electronic device 201 may increase the accuracy of the equivalent resistance change amount $\Delta$RIN corresponding to the output terminal of the charger 250.

According to an embodiment, the electronic device 201 may adjust the designated time corresponding to the blanking period 1610 to be longer than a reference time when the battery 270 is in a CV charging state. For example, since the equivalent resistance change amount $\Delta$RIN corresponding to the output terminal of the charger 250 may be large in the CV charging state of the battery 270, the electronic device 201 may adjust the designated time corresponding to the blanking period 1610 to be longer. Through this, the electronic device 201 may increase the accuracy of the equivalent resistance change amount $\Delta$RIN corresponding to the output terminal of the charger 250.

According to the above-described methods, the electronic device 201 according to an embodiment may charge the battery 270 using the SCVD 250 without adding additional hardware when receiving power from the external power supply 202 supporting AVS.

The above-described methods have described embodiments for receiving power wiredly from the external power supply 202 supporting AVS, but the technical idea of the disclosure may not be limited thereto. For example, the embodiments for the electronic device 201 of the disclosure can be applied even when receiving power wirelessly through a TX device (e.g., the TX device 203 of FIG. 2).

According to an embodiment, the electronic device 201 may include the communication circuit, the battery 270, the switched capacitor voltage divider SCVD 250 configured to convert an input voltage into an output voltage supplied to the battery according to a specified ratio, and the processor 220. According to an embodiment, the processor may be configured to, based on receiving power wiredly or wirelessly from the external power supply 220, charge the battery using the SCVD. According to an embodiment, the processor may be configured to, while charging the battery using the SCVD, identify a first voltage VIN and a first current IIN input to the SCVD and a second voltage VBAT and a second current IBAT input to the battery. According to an embodiment, the processor may be configured to, based on identifying the first voltage, the first current, the second voltage, and the second current, calculate a first resistance RT which is an equivalent resistance from the external power supply to an input terminal of the SCVD, and a second resistance RCH which is an equivalent resistance from an output terminal of the SCVD to an input terminal of the battery, and a third resistance RDCR which is an internal resistance of the battery. According to an embodiment, the processor may be configured to, in response to identifying a voltage change condition for requesting a change in a voltage of the power from the external power supply, request, from the external power supply via the communication circuit, the change in the voltage of the power by a first change value to change the voltage, wherein the first change value is identified using at least one of the first resistance, the second resistance, or the third resistance.

According to an embodiment, the processor may be configured to, determine the first change value so that an expected input voltage of the battery corresponds to a target input voltage of the battery, the target input voltage corresponding to a target input voltage when starting to charge the battery using the SCVD.

According to an embodiment, the processor may be configured to, based on identifying that the expected input voltage of the battery is greater than a target input voltage of the battery, reduce a target input current of the SCVD. According to an embodiment, the processor may be configured to determine the first change value so that the target input current is input to the SCVD and the target input voltage is input to the battery.

According to an embodiment, the processor may be configured to determine the first change value for satisfying a constant voltage (CV) condition in a CV charging state of the battery in response to identifying that the second voltage of the battery is greater than a target input voltage of the battery. According to an embodiment, the processor may be configured to request, from the external power supply, a reduction in the voltage of the power by the first change value.

According to an embodiment, the processor may be configured to determine the first change value for satisfying a constant current (CC) condition in a CC charging state of the battery in response to identifying that the first current of the SCVD is lower than the target input current of the SCVD. According to an embodiment, the processor may be configured to request, from the external power supply, an increase in the voltage of the power by the first change value.

According to an embodiment, the processor may be configured to determine whether the calculated second resistance is affected by the load change when the load change by a system of the electronic device is identified. According to an embodiment, the processor may be configured to compensate for the second resistance reduced by the load change based on determining that the calculated second resistance is affected by the load change.

According to an embodiment, the processor may be configured to identify a compensated second resistance in the CV charging state of the battery. According to an embodiment, the processor may be configured to determine the first change value for satisfying the CV condition using the compensated second resistance in response to identifying that the second voltage of the battery is greater than a target input voltage of the battery.

According to an embodiment, the processor may be configured to identify a compensated second resistance in the CC charging state of the battery. According to an embodiment, the processor may be configured to determine the first change value for satisfying the CC condition using the compensated second resistance in response to identifying that the first current of the SCVD is lower than a target input current of the SCVD.

According to an embodiment, the processor may be configured to identify the load change by a system of the electronic device based on identifying that the second resistance is lower than a reference value or identifying a load current corresponding to the load of the system.

According to an embodiment, the processor may be configured to identify a load change by a system of the electronic device. According to an embodiment, the processor may be configured to newly identify the first voltage, the first current, the second voltage, and the second current based on identifying the load change. According to an embodiment, the processor may be configured to newly identify the first resistance, the second resistance, and the third resistance using at least one of the newly identified first voltage, first current, second voltage, and second current. According to an embodiment, the processor may be configured to determine the first change value using the newly identified first resistance, second resistance, and third resistance.

According to an embodiment, the processor may be configured to determine whether the calculated second resistance is affected by both the load change and a voltage change when the load change by a system of the electronic device is identified. According to an embodiment, the processor may be configured to compensate for the second resistance reduced by the load change and the voltage change based on determining that the calculated second resistance is affected by both the load change and the voltage change.

According to an embodiment, the processor may be configured to measure the first voltage and the first current after a designated period (blanking period) after requesting, from the external power supply, the change in the voltage of the power by the first change value. According to an embodiment, the processor may be configured to calculate the amount of change of an equivalent resistance corresponding to the output terminal of the SCVD based on the measured first voltage and first current.

According to an embodiment, the processor may be configured to adjust the designated period to be shorter than the reference time when the battery is in the CC charging state. According to an embodiment, the processor may be configured to adjust the designated period to be longer than the reference time when the battery is in the CV charging state.

According to an embodiment, the first resistance may represent an equivalent resistance for the external power supply, a cable connecting a connector and the external power supply, an overvoltage protection circuit, and a flexible printed circuit board (FPCB) connecting the connector and the overvoltage protection circuit. According to an embodiment, the second resistance may represent an equivalent resistance for a protection circuit module (PCM) of the SCVD and the battery. According to an embodiment, the third resistance may represent an equivalent resistance for the internal circuit of the battery. According to an embodiment, the external power supply may support an adjustable voltage supply (AVS).

According to an embodiment, a method of operating the electronic device 201 including a SCVD may include charging the battery 270 included in the electronic device using the SCVD based on receiving power wiredly or wirelessly from the external power supply 202. According to an embodiment, the method of operating the electronic device may include identifying, while charging the battery using the SCVD, a first voltage VIN and a first current IIN input to the SCVD and a second voltage VBAT and a second current IBAT input to the battery. According to an embodiment, the method of operating the electronic device may include calculating, based on identifying the first voltage, the first current, the second voltage, and the second current, a first resistance RT which is an equivalent resistance from the external power supply to an input terminal of the SCVD, and a second resistance RCH which is an equivalent resistance from an output terminal of the SCVD to an input terminal of the battery, and a third resistance RDCR which is an internal resistance of the battery. According to an embodiment, the method of operating the electronic device may include in response to identifying of a voltage change condition for requesting a change in a voltage of the power from the external power supply, requesting, from the external power supply via a communication circuit of the electronic device, a change in the voltage of the power as much as a first change value for changing the voltage, wherein the first change value is identified using at least one of the first resistance, the second resistance, or the third resistance.

According to an embodiment, the identifying of the first change value may include determining the first change value so that an expected input voltage of the battery corresponds to a target input voltage of the battery, the target input voltage corresponding to a target input voltage when starting to charge the battery using the SCVD.

According to an embodiment, the identifying of the first change value may include reducing a target input current of the SCVD based on identifying that the expected input voltage of the battery is greater than a target input voltage of the battery. According to an embodiment, the identifying of the first change value may include determining the first change value so that the target input current is input to the SCVD and the target input voltage is input to the battery.

According to an embodiment, the method of operating the electronic device may further include determining the first change value for satisfying a CV condition in a CV charging state of the battery in response to identifying that the second voltage of the battery is greater than a target input voltage of the battery. According to an embodiment, the method of operating the electronic device may further include requesting, from the external power supply, a reduction in the voltage of the power by the first change value.

According to an embodiment, the method of operating the electronic device may further include determining the first change value for satisfying a CC condition in a CC charging state of the battery in response to identifying that the first current of the SCVD is lower than the target input current of the SCVD. According to an embodiment, the method of operating the electronic device may further include requesting, from the external power supply, an increase in the voltage of the power by the first change value.

According to an embodiment, the method of operating the electronic device may further include determining whether the calculated second resistance is affected by the load change when the load change by a system of the electronic device is identified. According to an embodiment, the method of operating the electronic device may further include compensating for the second resistance reduced by the load change based on determining that the calculated second resistance is affected by the load change.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (201), comprising:

   a communication circuit;
   a battery (270);
   a switched capacitor voltage divider (SCVD) (250) configured to convert an input voltage into an output voltage supplied to the battery according to a specified ratio; and
   a processor (220) configured to:

   based on receiving power wiredly or wirelessly from an external power supply (202 or 203), charge the battery using the SCVD,
   while charging the battery using the SCVD, identify a first voltage (VIN) and a first current (IIN) input to the SCVD and a second voltage (VBAT) and a second current (IBAT) input to the battery,
   based on the first voltage, the first current, the second voltage, and the second current, calculate a first resistance (RT) which is an equivalent resistance from the external power supply to an input terminal of the SCVD, and a second resistance (RCH) which is an equivalent resistance from an output terminal of the SCVD to an input terminal of the battery, and a third resistance (RDCR) which is an internal resistance of the battery,
   in response to identifying a voltage change condition for requesting a change in a voltage of the power from the external power supply, request, from the external power supply via the communication circuit, the change in the voltage of the power by a first change value to change the voltage, wherein the first change value is identified using at least one of the first resistance, the second resistance, or the third resistance.

2. The electronic device of claim 1, wherein the processor is configured to:
   determine the first change value so that an expected input voltage of the battery corresponds to a target input voltage of the battery, the target input voltage corresponding to a target input voltage when starting to charge the battery using the SCVD.

3. The electronic device of any one of claims 1 to 2, wherein the processor is configured to:

   reduce a target input current of the SCVD based on identifying that the expected input voltage of the battery is greater than a target input voltage of the battery, and
   determine the first change value so that the target input current is input to the SCVD and the target input voltage is input to the battery.

4. The electronic device of any one of claims 1 to 3, wherein the processor is configured to:

   determine the first change value for satisfying a constant voltage (CV) condition in a CV charging state of the battery in response to identifying that the second voltage of the battery is greater than a target input voltage of the battery, and
   request, from the external power supply, a reduction in the voltage of the power by the first change value.

5. The electronic device of any one of claims 1 to 4, wherein the processor is configured to:

determine the first change value for satisfying a constant current (CC) condition in a CC charging state of the battery in response to identifying that the first current of the SCVD is lower than a target input current of the SCVD, and

request, from the external power supply, an increase in the voltage of the power by the first change value.

6. The electronic device of any one of claims 1 to 5, wherein the processor is configured to:

determine, when a load change by a system of the electronic device is identified, whether the calculated second resistance is affected by the load change, and
compensate for the second resistance reduced by the load change based on the determination that the calculated second resistance is affected by the load change.

7. The electronic device of claim 6, wherein the processor is configured to:

determine a compensated second resistance in the CV charging state of the battery, and
in response to the determination that the second voltage of the battery is greater than a target input voltage of the battery, determine the first change value for satisfying the CV condition by using the compensated second resistance.

8. The electronic device of any one of claims 6 or 7, wherein the processor is configured to:

identify a compensated second resistance in the CC charging state of the battery,
in response to identifying that the first current of the SCVD is lower than a target input current of the SCVD, determine the first change value for satisfying the CC condition by using the compensated second resistance.

9. The electronic device of any one of claims 1 to 8, wherein the processor is configured to:
based on identifying that the second resistance is lower than a reference value or a load current corresponding to the load of a system of the electronic device, identify the load change by the system of the electronic device.

10. The electronic device of any one of claims 1 to 9, wherein the processor is configured to:

identify a load change by a system of the electronic device,
based on identifying the load change by the system of the electronic device, newly identify the first voltage, the first current, the second voltage, and the second current, and
newly identify the first resistance, the second resistance, and the third resistance using at least one of the newly identified first voltage, the first current, the second voltage, and the second current, and
determine the first change value using the newly determined first resistance, the second resistance, and the third resistance.

11. The electronic device of any one of claims 1 to 10, wherein the processor is configured to:

when a load change by a system of the electronic device is identified, identify whether the calculated second resistance is affected by both the load change and a voltage change, and
based on identifying that the calculated second resistance is affected by both the load change and the voltage change, compensate for the second resistance reduced by the load change and the voltage change.

12. The electronic device of any one of claims 1 to 11, wherein the processor is configured to:

re-measure the first voltage and the first current after a designated period of time (blanking period) after requesting, from the external power supply, the change in the voltage of the power by the first change value, and
calculate a change amount of equivalent resistance corresponding to the output terminal of the SCVD based on the re-measured first voltage and first current.

13. The electronic device of claim 12, wherein the processor is configured to:

adjust the designated time to be shorter than a reference time when the battery is in the CC charging state, and
adjust the designated time to be longer than the reference time when the battery is in the CV charging state.

**14.** The electronic device of any one of claims 1 to 13,

wherein the first resistance represents an equivalent resistance for a power supply circuit of the external power supply, a cable connecting a connector and the external power supply, an overvoltage protection circuit, and a flexible printed circuit board (FPCB) connecting the connector and the overvoltage protection circuit,

wherein the second resistance represents an equivalent resistance for the protection circuit module (PCM) of the SCVD and the battery, and

wherein the third resistance represents an equivalent resistance for an internal circuit of the battery, and wherein the external power supply supports an adjustable voltage supply (AVS).

**15.** A method of operating an electronic device (201) including a switched capacitor voltage divider (SCVD) (250), the method comprising:

charging a battery (270) included in the electronic device using the SCVD based on receiving power wiredly or wirelessly from an external power supply (202 or 203);

while charging the battery using the SCVD, identifying a first voltage (VIN) and a first current (IIN) input to the SCVD and a second voltage (VBAT) and a second current (IBAT) input to the battery;

based on identifying of the first voltage, the first current, the second voltage, and the second current, calculating a first resistance (RT) which is an equivalent resistance from the external power supply to an input terminal of the SCVD, and a second resistance (RCH) which is an equivalent resistance from an output terminal of the SCVD to an input terminal of the battery, and a third resistance (RDCR) which is an internal resistance of the battery;

in response to identifying of a voltage change condition for requesting a change in a voltage of the power from the external power supply, requesting, from the external power supply via a communication circuit of the electronic device, a change in the voltage of the power as much as a first change value for changing the voltage, wherein the first change value is identified using at least one of the first resistance, the second resistance, or the third resistance.

FIG. 1

ELECTRONIC DEVICE 101

MEMORY ~130

MEMORY ~132
VOLATILE MEMORY ~134
NON-VOLATILE MEMORY
INTERNAL MEMORY ~136
EXTERNAL MEMORY ~138

INPUT MODULE ~150

SOUND OUTPUT MODULE ~155

DISPLAY MODULE ~160

BATTERY ~189

PROCESSOR ~120
MAIN PROCESSOR ~121
AUXILIARY PROCESSOR ~123

POWER MANAGEMENT MODULE ~188

COMMUNICATION MODULE ~190
WIRELESS COMMUNICATION MODULE ~192
WIRED COMMUNICATION MODULE ~194

SUBSCRIBER IDENTIFICATION MODULE ~196

ANTENNA MODULE ~197

AUDIO MODULE ~170

SENSOR MODULE ~176

INTERFACE ~177

CONNECTING TERMINAL ~178

HAPTIC MODULE ~179

CAMERA MODULE ~180

PROGRAM ~140
APPLICATION ~146
MIDDLEWARE ~144
OPERATING SYSTEM ~142

SECOND NETWORK ~199

FIRST NETWORK ~198

ELECTRONIC DEVICE ~104

ELECTRONIC DEVICE ~102

SERVER ~108

~100

EP 4 783 411 A1

25

FIG. 2

EP 4 783 411 A1

FIG. 3A

FIG. 3B

FIG. 4A

FIG. 4B

START

| CHARGE BATTERY USING SCVD BASED ON RECEIVING POWER FROM EXTERNAL POWER SUPPLY SUPPORTING AVS THROUGH CONNECTOR | ~501 |

| IDENTIFY FIRST VOLTAGE (VIN) AND FIRST CURRENT (IIN) INPUT TO SCVD AND SECOND VOLTAGE (VBAT) AND SECOND CURRENT (IBAT) INPUT TO BATTERY WHILE CHARGING BATTERY | ~503 |

| IDENTIFY FIRST RESISTANCE, WHICH IS EQUIVALENT RESISTANCE FROM POWER SUPPLY OF EXTERNAL POWER SUPPLY TO INPUT TERMINAL OF SCVD, SECOND RESISTANCE, WHICH IS EQUIVALENT RESISTANCE FROM OUTPUT TERMINAL OF SCVD TO INPUT TERMINAL OF BATTERY, AND THIRD RESISTANCE, WHICH IS INTERNAL RESISTANCE OF BATTERY, BY USING AT LEAST ONE OF FIRST VOLTAGE, FIRST CURRENT, SECOND VOLTAGE, OR SECOND CURRENT | ~505 |

| IDENTIFY FIRST CHANGE VALUE FOR CHANGING VOLTAGE BY USING FIRST RESISTANCE, SECOND RESISTANCE, AND THIRD RESISTANCE BASED ON IDENTIFYING VOLTAGE CHANGE CONDITION FOR CHANGING VOLTAGE OF POWER RECEIVED FROM EXTERNAL POWER SUPPLY | ~507 |

| REQUEST, FROM EXTERNAL POWER SUPPLY, CHANGE IN VOLTAGE OF POWER BY FIRST CHANGE VALUE THROUGH CONNECTOR | ~509 |

END

FIG. 5

START

CONNECT TO EXTERNAL POWER SUPPLY (TA) — 601

INITIAL SETUP — 603

IDENTIFY FIRST VOLTAGE/FIRST CURRENT OF SCVD AND SECOND VOLTAGE/SECOND CURRENT OF BATTERY IN INITIAL SETUP STATE — 605

START TO CHARGE BATTERY USING SCVD — 607

IDENTIFY FIRST VOLTAGE/FIRST CURRENT AND SECOND VOLTAGE/SECOND CURRENT WHILE CHARGING — 609

CALCULATE FIRST RESISTANCE, SECOND RESISTANCE, AND THIRD RESISTANCE — 611

IDENTIFY FIRST CHANGE VALUE ($\Delta$VTH) — 613

IS VOLTAGE CHANGE CONDITION IDENTIFIED? — 615

NO

YES

REQUEST VOLTAGE OF POWER BY FIRST CHANGE VALUE ($\Delta$VTH) FROM EXTERNAL POWER SUPPLY — 617

END

FIG. 6

START

IDENTIFY FIRST VOLTAGE/FIRST CURRENT OF SCVD AND SECOND VOLTAGE/SECOND CURRENT OF BATTERY ⟋701

CALCULATE FIRST RESISTANCE, SECOND RESISTANCE, AND THIRD RESISTANCE ⟋703

IDENTIFY FIRST CHANGE VALUE (ΔVTH) ⟋705

PREDICTED BATTERY VOLTAGE (VBAT_NEXT) ≤ TARGET VOLTAGE? ⟋707

REDUCE TARGET CURRENT ⟋709

NO

YES

IS CV CONDITION SATISFIED? ⟋711

NO

YES

FIRST CHANGE VALUE (ΔVTH) ≥ MINIMUM VOLTAGE CHANGE VALUE OF TA? ⟋713

NO

YES

BATTERY VOLTAGE (VBAT) ≥ TARGET VOLTAGE? ⟋717

NO

YES

REQUEST VOLTAGE CHANGE BY FIRST CHANGE VALUE (ΔVTH) (REQUEST VOLTAGE INCREASE) ⟋715

REQUEST VOLTAGE CHANGE BY FIRST CHANGE VALUE (ΔVTH) (REQUEST VOLTAGE REDUCTION) ⟋719

FIG. 7

FIG. 8

FIG. 9

EP 4 783 411 A1

FIG. 10

FIG. 11

START

1201

CALCULATE RESISTANCE VALUES BASED ON
FIRST VOLTAGE/FIRST CURRENT OF SCVD
AND SECOND VOLTAGE/SECOND CURRENT OF
BATTERY MEASURED AT FIRST TIME POINT

1203

IS CHARGING OF
BATTERY STARTED USING SCVD?

YES

NO

1207

ARE CALCULATED
RESISTANCE VALUES AFFECTED BY
VOLTAGE CHANGE OF TA BEFORE
FIRST TIME POINT?

YES → ( 1 )

NO

1215

DETERMINE WHETHER
THE RESISTANCE VALUES CALCULATED
AT THE FIRST TIME POINT ARE AFFECTED BY
THE LOAD CHANGE

NO

1205

COMPENSATE FOR RESISTANCE
VALUES IN CONSIDERATION
OF INITIAL VALUES

YES

1217

COMPENSATE FOR RESISTANCE VALUES
IN CONSIDERATION OF LOAD CHANGE

( 2 )

DETERMINE RESISTANCE VALUES — 1219

END

FIG. 12A

① 

ARE RESISTANCE VALUES CALCULATED AT FIRST TIME POINT AFFECTED BY LOAD CHANGE? 1209

YES

NO

COMPENSATE FOR RESISTANCE VALUES IN CONSIDERATION OF VOLTAGE CHANGE 1213

COMPENSATE FOR RESISTANCE VALUES IN CONSIDERATION OF BOTH LOAD CHANGE AND VOLTAGE CHANGE 1211

② 

# FIG. 12B

FIG. 13

FIG. 14

START

↓

CHARGE BATTERY USING SCVD —1501

↓

DOES LOAD CHANGE OCCUR? ⁓1503

NO →

↓ YES

MEASURE FIRST VOLTAGE/FIRST CURRENT OF SCVD AND SECOND VOLTAGE/SECOND CURRENT OF BATTERY —1505

↓

CALCULATE RESISTANCE VALUES —1507

↓

END

# FIG. 15

FIG. 16

EP 4 783 411 A1

**TRANSLATION**

### INTERNATIONAL SEARCH REPORT

| International application No. |
| --- |
| **PCT/KR2025/014407** |

| A. | CLASSIFICATION OF SUBJECT MATTER |
| --- | --- |

**H02J 7/00**(2006.01)i; **H02M 3/07**(2006.01)i; **G01R 27/08**(2006.01)i

According to International Patent Classification (IPC) or to both national classification and IPC

| B. | FIELDS SEARCHED |
| --- | --- |

Minimum documentation searched (classification system followed by classification symbols)

H02J 7/00(2006.01); G01R 19/165(2006.01); G01R 31/36(2006.01); G01R 31/367(2019.01); H02J 50/12(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 배터리(battery), SCVD(switched capacitor voltage divider), 등가저항(equivalent resistance), 전압(voltage), 변경(change)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2023-0046907 A (SAMSUNG ELECTRONICS CO., LTD.) 06 April 2023 (2023-04-06)<br>paragraphs [74], [78]; claim 1; and figure 3. | 1-15 |
| A | US 2016-0190823 A1 (ANWELL SEMICONDUCTOR CORP.) 30 June 2016 (2016-06-30)<br>claim 1; and figure 5. | 1-15 |
| A | KR 10-2022-0037412 A (THE UNIVERSITY OF HONG KONG) 24 March 2022 (2022-03-24)<br>claims 1-29. | 1-15 |
| A | KR 10-2020-0107614 A (SAMSUNG ELECTRONICS CO., LTD.) 16 September 2020 (2020-09-16)<br>claim 1. | 1-15 |
| A | KR 10-2024-0000999 A (SAMSUNG ELECTRONICS CO., LTD.) 03 January 2024 (2024-01-03)<br>claim 1. | 1-15 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 December 2025** | **11 December 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**TRANSLATION**

## INTERNATIONAL SEARCH REPORT
### Information on patent family members

International application No.

**PCT/KR2025/014407**

| Patent document cited in search report | | | Publication date (day/month/year) | Patent family member(s) | | | Publication date (day/month/year) |
|---|---|---|---|---|---|---|---|
| KR | 10-2023-0046907 | A | 06 April 2023 | CN | 118056339 | A | 17 May 2024 |
| | | | | EP | 4391281 | A1 | 26 June 2024 |
| | | | | EP | 4391281 | A4 | 15 January 2025 |
| | | | | WO | 2023-054868 | A1 | 06 April 2023 |
| US | 2016-0190823 | A1 | 30 June 2016 | None | | | |
| KR | 10-2022-0037412 | A | 24 March 2022 | CN | 114503388 | A | 13 May 2022 |
| | | | | CN | 114503388 | B | 30 September 2025 |
| | | | | EP | 3973608 | A1 | 30 March 2022 |
| | | | | EP | 3973608 | A4 | 05 April 2023 |
| | | | | JP | 2022-537892 | A | 31 August 2022 |
| | | | | JP | 7440105 | B2 | 28 February 2024 |
| | | | | KR | 10-2762304 | B1 | 03 February 2025 |
| | | | | US | 12113390 | B2 | 08 October 2024 |
| | | | | US | 2022-0224140 | A1 | 14 July 2022 |
| | | | | WO | 2020-233552 | A1 | 26 November 2020 |
| KR | 10-2020-0107614 | A | 16 September 2020 | CN | 111668560 | A | 15 September 2020 |
| | | | | CN | 111668560 | B | 29 October 2024 |
| | | | | KR | 10-2811048 | B1 | 21 May 2025 |
| | | | | US | 11243255 | B2 | 08 February 2022 |
| | | | | US | 11774502 | B2 | 03 October 2023 |
| | | | | US | 2020-0284841 | A1 | 10 September 2020 |
| | | | | US | 2022-0155374 | A1 | 19 May 2022 |
| KR | 10-2024-0000999 | A | 03 January 2024 | US | 2023-0420973 | A1 | 28 December 2023 |
| | | | | WO | 2023-249221 | A1 | 28 December 2023 |

Form PCT/ISA/210 (patent family annex) (July 2022)